# EUROPEAN PATENT SPECIFICATION

(11) **EP 1 006 218 B1**
(45) Date of publication and mention of the grant of the patent: **08.03.2006**
(21) Application number: 99124157.1
(22) Date of filing: 02.12.1999
(51) Int. Cl.: C25D 5/30, F01L 1/12, F16J 1/00, F16D 65/12, F02F 3/10, C25D 3/20

(54) **Plated disc brake and method of manufacturing same**
Beschichtete Bremsscheibe und Methode zu deren Herstellung
Disque de frein plaqué et sa méthode de fabrication

(30) Priority: 03.12.1998 JP 34474198; 03.12.1998 JP 34474598; 29.07.1999 JP 21589699
(43) Date of publication of application: 07.06.2000
(73) Proprietor: YAMAHA HATSUDOKI KABUSHIKI KAISHA, Iwata-shi Shizuoka-ken (JP)
(72) Inventor: Kurita, Hirotaka, Iwata-shi, Shizuoka-ken (JP); Yamagata, Hiroshi, Iwata-shi, Shizuoka-ken (JP); Koike, Toshikastu, Iwata-shi, Shizuoka-ken (JP)
(74) Representative: Grünecker, Kinkeldey, Stockmair & Schwanhäusser Anwaltssozietät

(56) References cited:
- EP-A- 0 892 088
- DE-A- 2 416 915
- DE-A- 2 921 952
- DE-A- 19 608 952
- DE-A- 19 653 210
- DE-C- 19 520 880
- FR-A- 2 549 090
- GB-A- 1 152 100
- GB-A- 1 409 059
- GB-A- 2 154 614
- US-A- 4 221 639
- US-A- 4 846 940
- PATENT ABSTRACTS OF JAPAN vol. 013, no. 523 (C-657), 21 November 1989 (1989-11-21) & JP 01 212765 A (MAZDA MOTOR CORP), 25 August 1989 (1989-08-25)
- PATENT ABSTRACTS OF JAPAN vol. 013, no. 320 (M-853), 20 July 1989 (1989-07-20) & JP 01 106909 A (TOYOTA MOTOR CORP), 24 April 1989 (1989-04-24)
- PATENT ABSTRACTS OF JAPAN vol. 014, no. 510 (M-1045), 8 November 1990 (1990-11-08) & JP 02 211308 A (SUZUKI MOTOR CO LTD), 22 August 1990 (1990-08-22)
- PATENT ABSTRACTS OF JAPAN vol. 1995, no. 02, 31 March 1995 (1995-03-31) & JP 06 323327 A (SUMITOMO LIGHT METAL IND LTD), 25 November 1994 (1994-11-25)
- WERNICK ET AL. : "The Surface Treatment and Finishing of Aluminium and its Alloys, Volume 2" 1987 , FINISHING PUBLICATIONS ET AL. , TEDDINGTON, GB XP002176437 * page 1061, line 28 - page 1062, line 6 *

## Description

This invention relates to a brake disk according to the preamble part of the independent claim 1 and to a method of manufacturing a brake disk.

Hitherto, an aluminum alloy has been used for a part constituting an apparatus for the purpose of lightening the apparatus. One example of such a part that is demanded for lightening is a brake disk of a disk brake device mounted on vehicles such as automobiles and motorcycles. Namely, there is a high demand for brake disks which have as light a weight as possible in order to improve both running performance and fuel consumption. One idea for achieving the lightening the brake disk is to use an aluminum alloy for forming a plate-like part (hereinafter, the plate-like part will be called "brake disk body") which is to be fixed to a hub.

When the brake disk body is formed of an aluminum alloy, for the purpose of improving the wear-resistance thereof, a donut-like disk made of an iron-containing metal is bonded to a surface of the brake disk body to form a frictional surface. Such a brake disk is disclosed, for example, in JP-A-H5-26268.

The brake disk disclosed in the above publication includes a brake disk body formed of an aluminum alloy and having a front surface portion with which a brake pad is slidably contacted. A donut-like disk made of a cast iron is secured to the above portion by friction welding or an alfin process.

Ordinary machine parts having a slide surface, such as connecting rods, valve lifters and locker arms of engines and scroll sections of scroll compressors, are also occasionally formed of an aluminum alloy for the purpose of lightening the machines.

Since an aluminum alloy has a greater coefficient of thermal expansion than that of iron-containing metal such as cast iron, the use of a construction in which a cast iron disk is bonded to an aluminum alloy brake disk body is apt to cause bending or flex of the brake disk due to thermal stresses generated by a temperature increase during braking operation and to result in separation of the iron disk from the brake disk body.

The above construction also has a problem because a specific bonding device is required and, hence, an increased manufacturing cost is needed for bonding the cast iron disk to the brake disk body by friction welding or an alfin process.

Further, when an aluminum alloy is used for parts of ordinary machines, it is necessary to improve the wear-resistance of a slide surface thereof. In particular, when an aluminum alloy is used for parts to be used under high temperature conditions such as engine parts, it is necessary to further improve the wear-resistance of the slide surface, because a high thermal load is applied to these parts.

From GB 2 154 614 A a brake disk, as indicated above, is known. In particular, GB 2 154 614 A discloses densified coatings by application of direct fluid pressure, wherein said method is applied in the fabrication of brake elements having improved performance and friction braking systems.

It is an objective of the present invention to improve a brake disk as indicated above, so as to be subjected to a high thermal load and have a frictional surface having much improved wear-resistance, and a method of fabricating such a brake disk at a low cost.

According to the present invention, this objective is solved by a brake disk made of aluminum or an aluminum alloy having a frictional surface with which another part is slidably contactable, wherein at least said frictional surface is provided with at least a first plating layer of a metal having a high wear-resistance, wherein said plating layer has cracks having a fine network and formed throughout the whole area thereof wherein said cracks in the form of a fine network have such a structure that an inscribed circle of each of said networks of said cracks has a diameter of not greater than 1.5 mm.

The objective is further solved according to the present invention by a method of manufacturing a brake disk made of aluminum or an aluminum alloy having a frictional surface with which another part is slidably contactable, wherein a billet is formed by spray-forming, the billet is forged to obtain the brake disk and electroplating is performed to provide at least the frictional surface with at least a first plating layer of a metal having a high wear-resistance, cracks are formed in the plating layer having a fine network and formed throughout the whole area of the plating layer, wherein said cracks in the form of the fine network have such a structure that an inscribed circle of each of said networks of said cracks has a diameter of not greater than 1.5 mm.

In cases where the brake disk will be exposed to environments being disadvantageous to said brake disk, it is advantageous when a second plating layer of a metal having a high corrosion resistance is provided between said plating layer having the cracks of a network and the aluminum alloy base metal.

According to an advantageous embodiment of the present invention, an intermediate plating layer of a material or metal having a high corrosion-resistance is provided between said plating layer having the cracks of a network and the aluminum alloy or material base metal.

According to the above invention, for example, the intermediate plating layer formed of a metal having a high corrosion-resistance can prevent water intruded into the cracks from contacting with the aluminum alloy. Therefore, even when water dew or rain drops are deposited on the brake disk, no corrosion of the brake disk is caused; i.e. separation of the plating layer by corrosion is prevented. The same applies if the brake disk is exposed to an aggressive environment.

According to a further preferred embodiment of the present invention, the plating layer is made of iron or an iron-containing alloy from surfaces of which nitrogen or a combination of nitrogen with sulfur has penetrated thereinto.

According to the above invention, since the plating layer has been subjected to a nitrification treatment and has an increased hardness, the wear-resistance thereof is improved.

According to the above invention, the wear-resistance of the slide surface of the brake disk made of an aluminum alloy is improved.

A huge variety of materials for that brake disk is possible and the same applies to said plating layer.

As mentioned above, it is advantageous to use aluminum alloy for that brake disk and metal having a high wear-resistance for that plating layer, although the present invention is not limited to this.

It is advantageous for example to use a brake disk according to the present invention for a brake disk device, wherein a body of the brake disk is made of aluminum alloy, in that the frictional surface of said brake disk body is provided with the plating layer of a metal having a high wear resistance, and in that the metal layer has cracks in the form of a fine mesh network throughout the whole area thereof.

In this connection, it is advantageous when each of brake pads is formed of a material having a hardness lower than that of the plating layer and is made exchangeable or wherein each of the brake pads is formed of a synthetic resin material.

Moreover, it is possible that each of the brake pads is formed of a CU-containing sintered material.

According to the above invention, a metal layer made of a metal having a high wear-resistance can be formed by plating on an aluminum alloy part and cracks are formed in the metal layer during the plating step. The cracks change their shapes into a form of a fine network by a heat generated during use of the aluminum alloy part.

Generally used plating devices may be used for the above method. Therefore, it is not necessary to use a specific bonding device for providing a metal layer having a high wear-resistance on the aluminum alloy part. Neither specific device nor specific treatment for forming cracks in the metal layer is necessary.

According to the above invention, a layer having a high wear-resistance can be formed by welding on an aluminum alloy or material part. Further, cracks in the form of a fine network can be formed in the layer during the heating step subsequent to the plating.

During the heating step subsequent to the plating, the metal constituting the metal layer and the aluminum alloy constituting the aluminum alloy part are diffused into each other to form a diffusion layer therebetween.

Further, cracks in the form of a fine network can be formed in the layer by the heat used in carrying out the nitrosulfurization.

By performing the nitrosulfurization treatment, the hardness of the metal layer can be increased. By the heat in the nitrodesulfurization treatment, the metal constituting the metal layer and the aluminum alloy constituting the aluminum alloy part are diffused into each other to form a diffusion layer therebetween.

Further, a method of manufacturing the brake disk is a method wherein, before said aluminum alloy or material layer is provided with said metal or material layer by plating, a metal or material layer having a high corrosion-resistance is formed by plating on said slide surface.

According to the above invention, for example an intermediate metal layer for preventing water intruded into the cracks from contacting with the aluminum alloy can be formed by welding. Thus, two kinds of metal layers can be formed by one welding device.

Other preferred embodiments of the present invention are laid down in further dependent claims.

In the following, the present invention is explained in greater detail with respect to several embodiments thereof in conjunction with the accompanying drawings, wherein:
Fig. 1 is a sectional view showing a disk brake device;
Fig. 2 is a sectional view of a brake caliper;
Fig. 3 is an enlarged sectional view of a essential part of a brake disk;
Fig. 4 diagrammatically shows the cracks in a plating layer;
Fig. 5 is a process chart for the description of a method of manufacturing a brake disk;
Fig. 6 is a process chart for the description of pretreatment for a plating process;
Fig. 7 is a process chart for the description of a method of manufacturing a brake disk by heating to form cracks;
Fig. 8 is also an enlarged sectional view of a essential part of a brake disk;
Fig. 9 is a process chart for the description of a method of manufacturing a brake disk by nitrosulphurizing to form cracks;
Fig. 10 is a process chart for the description of a method of manufacturing a brake disk by burnishing to form cracks;
Fig. 11 is a sectional view showing another embodiment in which a metal layer is formed between a plating layer and a brake disk body;
Fig. 12 is a process chart for the description of a plating process;
Fig. 13 is a sectional view showing a variable valve actuating mechanism not being part of the present invention;
Fig. 14 is an enlarged sectional view of a essential part of a valve lifter not being part of the present invention;
Fig. 15 is a perspective view of the valve lifter;
Fig. 16 is a sectional view showing that the surface of the valve lifter is being plated;
Fig. 17 is an enlarged sectional view showing the essential part of a rapid plating apparatus for plating the valve lifter;
Fig. 18 is a sectional view showing the rapid plating apparatus for plating the valve lifter;
Fig. 19 is a sectional view of a variable valve actuating mechanism having a rocker arm not being part of the present invention;
Fig. 20 is a perspective of the rocker arm;
Fig. 21 is a sectional view showing that the surface of the rocker arm is being plated;
Fig. 22 is a sectional view showing that the surface of a piston, not being part of the present invention, is being plated; and
Fig. 23 is a sectional view showing that the surface of a connecting rod, not being part of the present invention, is being plated

In the following, description of embodiments of the present invention will be given for a brake disk provided with a plating layer of a metal having a higher wear-resistance. However, all appropriate materials for said brake disk as well as for said layer are applicable.

### First Embodiment

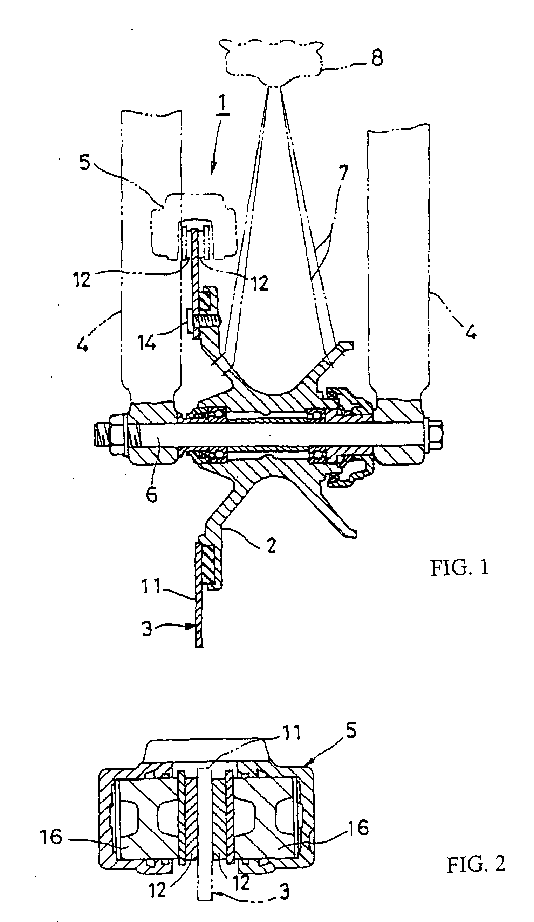

One embodiment of a brake disk and a method of manufacturing same according to the present invention will be described in detail below with reference to Figs. 1 through 6. Here, an embodiment of the present invention as applied to the brake disk of a front wheel disk brake device for a motorcycle is described.

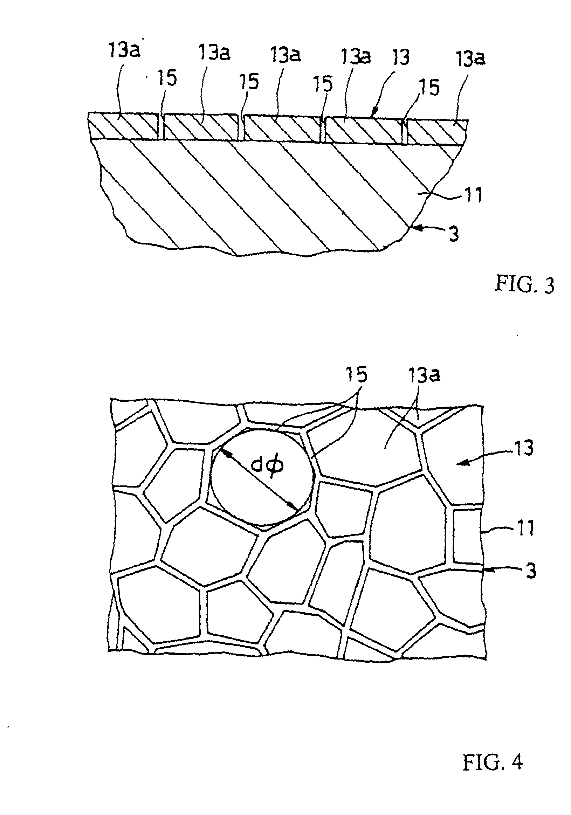

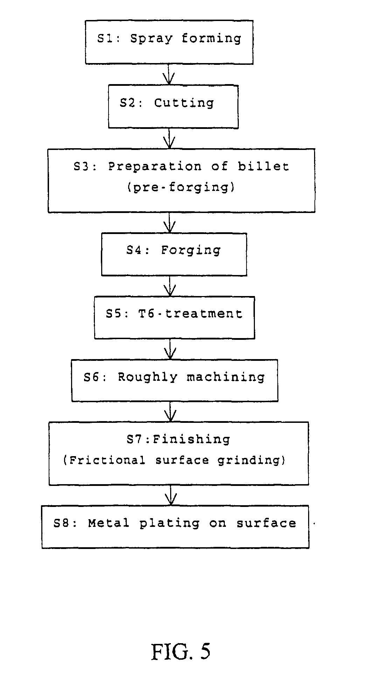

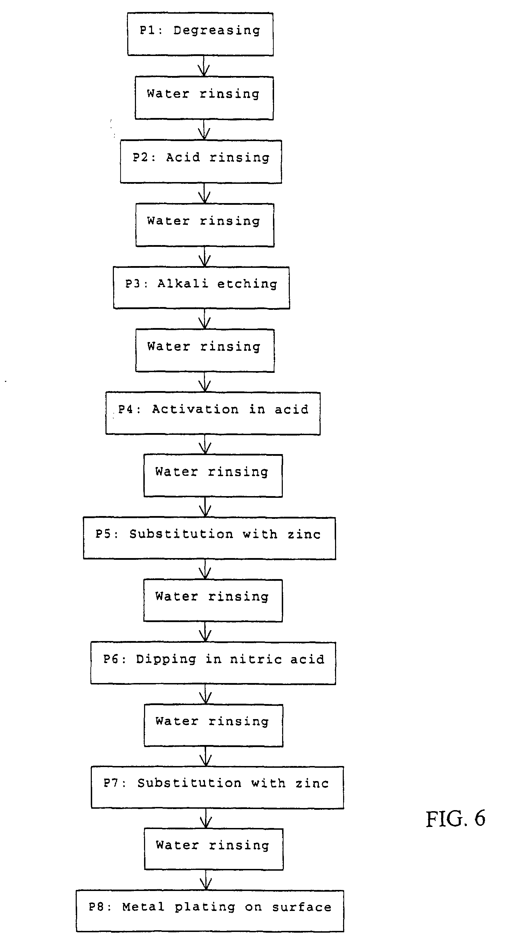

Fig. 1 is a cross-sectional view showing the disk-braking device. Fig. 2 is a cross-sectional view of the brake caliper. Fig. 3 is a cross-sectional view illustrating the enlarged substantial part of the brake disk. Fig. 4 is a view illustrating the model of the crack on the plating layer. Fig. 5 is a flow diagram for describing the method of manufacturing of the brake disk. Fig. 6 is a flow diagram for describing the preparation of the plating.

In these Figures, illustrated as reference numeral 1 is a disk-braking device according to the present embodiment. The disk-braking device is for the front wheel of a motorcycle and comprising a brake disk 3 fixed on a front wheel hub 2 and a brake caliper 5 fixed on a front fork 4. In Fig. 1, a reference numeral 6 shows an axle of the front wheel, the reference numeral 7 shows spokes, and numeral 8 shows a rim.

A brake disk 3 mentioned above is comprised of a brake disk body 11 formed in a disk shape by aluminum alloy and a plating layer 13 (see Fig. 3) formed on the both of friction surfaces where brake friction pads 12 (see Fig. 2) of above brake caliper 5 in the brake disk body 11 are pushed to slidably contact, and a radially inward portion of the brake disk body 11 is fixed to above hub 2 with a fixing bolt 14 (see Fig. 1.)

Above plating layer 13 is comprised of wear-resistance metals such as Fe, Fe-Cr alloy, Cr and Ni, and formed by electrolytically plating to the brake disk body 11. In the plating layer 13, as shown in Figs. 3 and 4, networked microscopic cracks 15 are formed over entire area of the plating forming ranges. In this way, by forming the cracks 15, a number of microscopic metal pieces 13a separated to one another by the cracks 15 are formed on the both of the friction surfaces of the brake disk body 11.

Above brake caliper 5, as shown in Fig. 2, is adopted the conventionally known construction disposing the brake pad 12 and hydraulic piston 16 respectively on each side of above brake disk 3. In a braking state, a pair of brake pads 12 is pushed to the both sides of the brake disk 3 by the hydraulic pistons 16 to pinch the brake disk 3 with two brake pads 12.

The brake pads 12 are formed with the material having lower hardness than the metal material forming the plating layer 3 of the brake disk 1 above. For materials of the brake pad 12, synthetic resin materials or sintering materials containing Cu are taken as examples. In this manner, setting the hardness of the brake pads 12 to relatively lower prevents above plating layer from wearing by the friction during the braking.

Manufacturing method of the braking disk 3 constituting as set forth will be described next with reference to the Figs. 5 and 6.

The brake disk 3 is formed by means of formation of the brake disk body 11 to predetermined shape and electrolytical plating to the brake disk body 11.

That is to say, first of all, as shown with step S1 in Fig. 5, melted aluminum alloy is sprayed at mist state from a nozzle (not shown) into a target of predetermined radius. Generated mist of aluminum alloy is cooled in the middle of the process to be half-solidified by passing through cool air or normal temperature air. By means of spray forming that builds the mist of half-solidified aluminum alloy up in approximately cylindrical shape having predetermined radius, a cylinder is formed as the aluminum alloy particles each having the predetermined radius of, for example, 350 mm are solidified.

In step S2, this aluminum alloy particle cylinder is cut to make a disk having the thickness of, for example, 50 mm. By means of pre-forging in step S3, the disk having the thickness of, for example, 50 mm is compressed to about 30 mm and formed a hole in the center to make a doughnut-shaped disk that its density is increased. This doughnut-shaped disk is a billet.

This billet is assumed as a doughnut-shaped disk having the surface hardness of H_{RE} = 55-88 and the thickness of 15 mm in the forging process shown in step S4. The doughnut-shaped disk is treated in the T6-process of step 5 that is a solution treatment retaining in the solution temperature of 500°C for 4 hours then water cooling and subsequent age hardening treatment retaining at 200-300°C for 4 hours then air cooling to be surface and internal hardness of H_{RE} = 90-100.

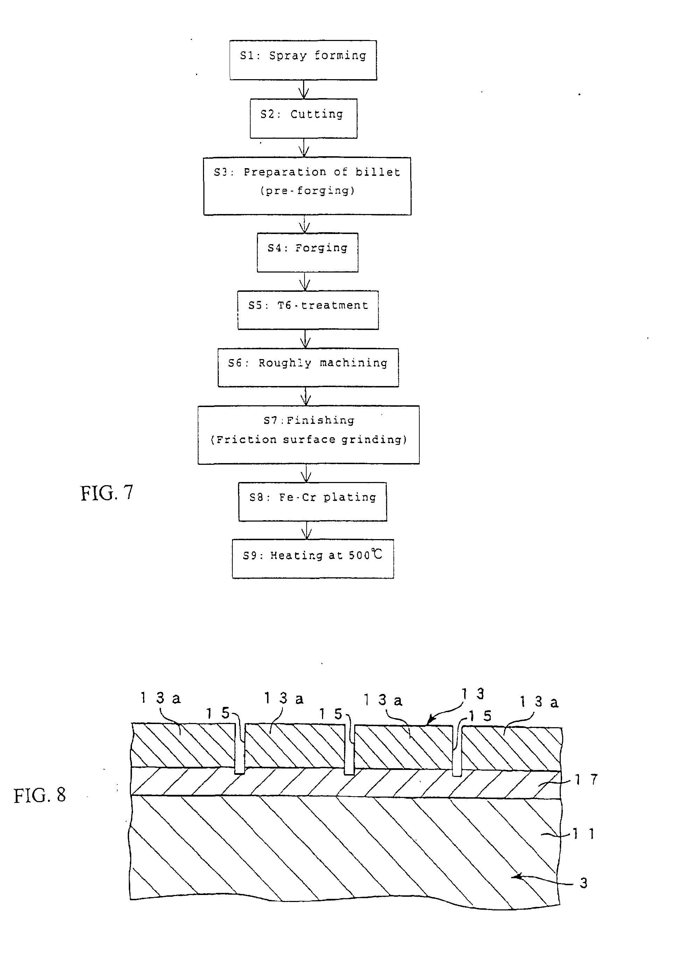

By means of rough processing of step 6, inner and outer shape processing, mounting hole processing and processing of disk surface are carried out. A pre-processing is performed to the friction surface of the disk surfaces about the degree of Ra 25µm as the surface roughness prior to the grinding. In the finishing process of step S7, the friction surface is ground until the surface roughness reaches the degree of Ra 1-3.5µm. After completing the finishing, the process is moved to plating process as shown in Fig. 8.

In the plating process S8, at first, pre-plating process is carried out to the brake disk body 11 as shown in Fig. 6, and then the electrolytical plating is performed.

The pre-plating process has the equal process contents to the preparation at the electrolytical plating generally performed and is carried out by a degreasing process indicated with step P1 in Fig. 6, an acid cleaning process indicated with step P2, an alkali etching process indicated with step P3, an acid activity process indicated with step P4, a zinc substitution process indicated with step P5, a nitric acid immersion process indicated with step P6, a zinc substitution process indicated with step P7, and a water rinsing process performed between each process and after the zinc substitution process of step P7.

In each process of step P1-P7, as shown in Table 5, the brake disk body 11 is immersed for the predetermined processing period in baths respectively storing treatment liquid (water-based), which contains predetermined composition, and keeping the predetermined bath temperature to be performed the process. By performing these pre-processing, adhesion between the plating layer in the next plating process and the aluminum alloy layer as base material is improved.

After performing the pre-plating process, the electrolytical plating is carried out to the brake disk body 11 in step P8.

The plating is performed by means of immersing the brake disk body 11 as a cathode with an anode into a stationary bath of plating solution and connecting those to the power supply directly. The plating is also performed until the thickness of the plating layer 13 generated on the brake disk body 11 becomes approximately 20µm or more.

In the plating process of the step P8, when the process such as Fe plating or Fe-Cr alloy plating is performed, the plating conditions as shown in Table 6 is complied. In other words, by means of the stationary bath filling with the plating solution holding the indicated plating solution compounds and temperature, and plating with the current density and plating period as shown in Table 6, the plating layer having the thickness of coating and hardness shown generally in Table 6 can be obtained. In order to make the thickness of coating to be 20µm or more, the current density may be made larger, and/or the plating period may be made longer than a value indicated in the Table.

The brake disk body 11 is provided with a mask (not shown) on the other part from the friction surface before immersing into the plating solution so that the plating layer 13 is formed only to the friction surface of the brake disk body 11. Or, the plating layer 13 may be formed over whole of the outer surface of the brake disk 3 without using a such mask.

By forming the plating layer 13 as if the thickness is thicker than at least 10µm, cracks 15 generate, as illustrated in Figs. 3 and 4, on the plating layer 13 without performing any special treatment. When the thickness of the plating layer is about 10µm, a diameter d of a circle inscribing to a metal piece of the plating layer within cracks 15 shown in Fig. 4 becomes approximately 1.5 mm even if it were the larger one. This is because inner stress is generating to intend to shrink in the plating layer, and because networking cracks are generated by the increment of the thickness on the plating surface according to the inner stress.

The brake disk body 11 completed the plating process is mounted on the hub 2 above without performing special post processes. Then, the motorcycle is driven to use the front wheel brake. When the temperature of the plating layer 13 is increased by the frictional heat generated from friction between the brake pad 12 and outer surface of the plating layer 13 above, thermal expansion coefficient of the aluminum alloy made brake disk body 11 is larger than the plating layer, so that the brake disk body 11 is intended to expand. The plating layer, however, expands the width of the cracks and does not inhibit the elongation of the brake disk body 11, so that the friction surface will not be distorted. That is to say, distortions are not generated such as bending or flexure causing large frictional force to affect partially by the brake pad 12 during the braking operation, and the plating layer provided for improving the wear-resistance will not flake off the brake disk body 11.

Therefore, the brake disk 3 constituted as set forth can be formed the brake disk body 11 from aluminum alloy and attempted the weight savings, as well as improving the wear-resistance with metals formed to the friction surface by plating, so that improvement in both weight saving and wear-resistance can be achieved.

The metal for improving the wear-resistance is formed by means of the plating having lower temperature change. To the plating device for performing this manufacturing method can be used a general purpose stationary bath type or a rapid plating type circulating the plating solution, so that the distortion of the friction surface can be made smaller than a bonding machine involving the hot melting for providing the high wear resistant metals to the brake disk body 11, and an elimination of the distortion or regrinding can not be needed.

When the diameter d of the circle inscribing to a metal piece of the plating layer within cracks 15 is approximately 1.5 mm even if it were the larger one, the metal piece of the plating layer within the cracks 15 is granted that it inhibits the elongation of the brake disk body 11 bonding with the metal piece, the size of the metal piece of the plating layer is small, and warp and bending occurred in the part of metal piece of the plating layer are also small. In addition, large partial frictional force is affected onto the brake pad 12, so that large shearing stress is not supposed to affect on the bonding surface between the plating layer and the brake disk body 11, and also the metal piece of the plating layer within the cracks 15 is not supposed to flake off. In proportion as the plating layer becomes big, inner stress is prone to remain even though cracks 15 are generated on the plating layer 13 during the plating, and the metal piece of the plating layer 13 within the cracks 15 is expanded by the frictional heat generated by the braking operation, so that finer cracks 15 generate on the metal piece 13a of the plating layer 13.

If thickness of the plating layer 13 is more than 20µm, the occurrence of the finer cracks 15 onto the metal piece of the plating layer is definitely arisen. By means of these fine cracks, the plating layer 13 is not inhibit the elongation of the brake disk body 11 more certainly during the braking operation, and flaking-off of the plating layer 13 cased by the distortion such as warp or bending can be eliminated.

That is to say, the manufacturing method of the brake disk 3 according to the present embodiment is adopting the method of forming cracks 15 onto the metal layer 13 during the plating process by setting the thickness of the plating layer 13 to be 20µm or more and the method of changing cracks 15 by means of plating into finer cracks 15 by using the brake disk 3 actually, so that there are no need to have a device or a special treatment for forming cracks exclusively to the metal layer formed by the plating.

### Second Embodiment

The cracks 15 on the plating layer 13 can be formed in fine network by heating the plating layer 13 after plating without using the frictional heat during the braking operation. A manufacturing method of a brake disk according to the present embodiment is described in more details in Figs 7 and 8.

Fig. 7 is a flow chart for describing the manufacturing method of the brake disk forming cracks by heating. Fig. 8 is an enlarged cross-sectional view of a main part of the brake disk formed by means of the manufacturing method according to the present embodiment. In these Figures, the identical or similar members with described in the above Figs. 1 through 6 will be added same reference numerals and omitted the detailed descriptions.

To put the manufacturing method of the brake disk according to the present embodiment into practice, first, the brake disk body 11 is formed in predetermined shape through processes illustrated as steps S1-S7 in Fig. 7, and then a plating is performed in step S8. In this embodiment provides an example of adopting Fe-Cr alloy as an plating layer metal having high wear-resistance. The process condition of surface metal plating depends on Table 6 in this case.

Furthermore, in addition to the Fe-Cr alloy, other metals such as Fe, Cr and Ni can be used as the plating layer metals.

When the present embodiment is adopted, the plating is performed as the thickness of the plating layer 13 will be within a range of 10-100µm. The plating method is equal to when the first embodiment is adopted. If the first embodiment is adopted, the plating layer 13 should be formed thicker than 20µm for its thickness. However, when the present embodiment is adopted, finer network cracks 15 are definitely formed even though the thickness of the plating layer 13 is formed thinner than when the first embodiment is adopted.

After completing the plating process, heating is performed for 5 hours at approximately 500°C as shown with step S9 in Fig. 7.

This heating is performed by inserting the brake disk body 11 into a heating furnace (not shown). Due to the heating of the plating layer 13 in this heating process, fine network cracks are formed onto the plating layer 13, and as shown in Fig. 8, a number of metal pieces 13a comprising of fine Fe-Cr alloy are formed on the friction surface of the brake disk body 11 in divided state from each other by cracks 15.

According to this method, because the entire brake disk body 11 is heated, the entire body is thermally expanded at the uniform rate, and in addition to the cracks 15 due to the inner stress at plating, cracks can be generated more finely and uniformly, so that a plating layer metal piece 13a will not become a partially large piece. On this account, the size of inscribing circle of the plating layer metal piece 13a may not varies widely.

To form finer network cracks 15, heating temperature may be set to approximately 400°C or above due to the difference between coefficients of thermal expansion of the base material (aluminum alloy) and the plating layer 13. As shown in the present embodiment, when heating temperature is set to 500°C, Fe or Cr atom forming the plating layer 13 is diffused to the base material, and an atom of aluminum alloy forming the brake disk body 11 is diffused to the plating layer 13 having cracks 15 each other, so that a diffused layer as indicated with a reference numeral 17 in Fig. 8 is formed in between. The diffused layer 17 can be formed in processing period of approximately 5 hours if the heating temperature is approximately 500°C.

Furthermore, the diffusion rate exponentially increases in proportion to the processing temperature, so that if the temperature of 500°C is lowered to be 400°C or less, the diffusion rate is decreased to take too long to form the diffused layer 17. In the meanwhile, if the processing temperature is set to 600°C or greater, the brake disk body 11 made of aluminum alloy is partly melted, so that disadvantage of deformation of the brake disk body 11 is arisen. Moreover, the part of cracks 15 forming in the plating process remains on the diffused layer 17, and new cracks 15 formed by the heating is mostly formed on the plating layer 13.

As described above, even if the plating layer 13 is heated at 400°C or greater after plating to form the fine network cracks 15 onto the plating layer 13, the same effect with the first embodiment is achieved.

As described in this embodiment, by means of heating as the diffused layer 17 is formed between the plating layer 13 and the brake disk body 11, adhesion strength of the plating layer 13 can be increased.

### Third Embodiment

The cracks 15 in the plating layer 13 can be formed in a fine network pattern also by applying nitrosulphurization process to the metal of the plating layer 13.

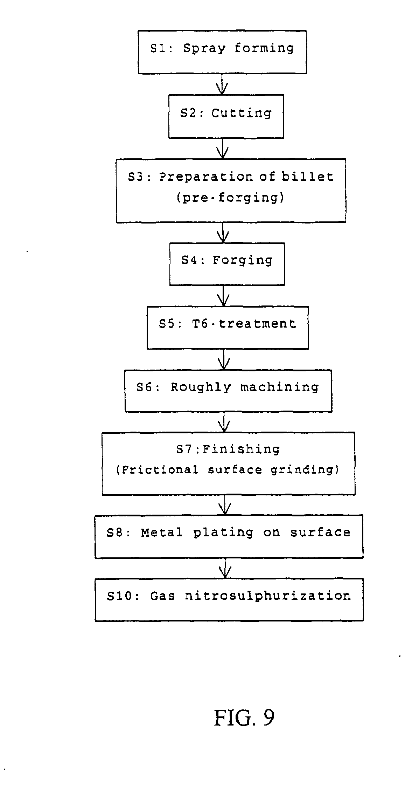

A method of manufacturing a brake disk of this embodiment will be described in detail in reference to Fig. 9.

Fig. 9 is a process diagram for explaining the method of manufacturing the brake disk in which cracks are formed by nitrosulphurization. In the Figure, components that are the same as or counterparts of those described in reference to Figs. 1 to 8 are provided with the same numerals and detailed descriptions are omitted.

In order to carry out the brake disk manufacturing process of this embodiment, first a brake disk body 11 is formed into an intended shape through the steps S1 to S7 shown in Fig. 9. Next, the brake disk body 11 is plated in the step 8. Here, Fe-Cr alloy is employed for example as a highly wear-resistant metal. Incidentally, Fe, Cr, and Ni can be used in place of the Fe-Cr alloy.

Plating is carried out so that thickness of the plating layer 13 falls within the range of 10 to 100 µm. The plating method is the same as that in the first embodiment. While the thickness of the plating layer 13 must be 20 µm or thicker in the first embodiment, in this embodiment, the thickness may be thinner than that in the first embodiment.

After finishing the plating process, a gas nitrosulphurization process is applied in the step S10 as shown. The gas nitrosulphurization process is carried out under the gas nitrosulphurization conditions shown in Table 7. Namely, it is carried out by heating the plated brake disk body 11 in an oven of mixed atmosphere of N₂, H₂S, and NH₃. Heating temperature is in the range of 500°C ± 50°C, and the heating time is about 5 hours.

By applying the nitrosulphurization process in this way, the hardness of the metal of the plating layer 13 increases. As the plating layer 13 is heated during the nitrosulphurization process, cracks 15 of a fine network pattern are produced in the plating layer 13. That is to say, a large number of fine Fe-Cr alloy pieces 13a in the state of being divided from each other by the cracks 15 and having a higher hardness than in the first embodiment are formed on the brake disk body 11.

Forming the fine network pattern of cracks 15 in the plating layer 13 by applying the nitrosulphurization process after plating as described above also provides the same advantages as with the first embodiment, namely the wear-resistance is high and the plating layer 13 is less likely to come off.

Since the temperature when the nitrosulphurization process is applied is high like in the second embodiment, atoms of Fe or Cr forming the plating layer 13 are diffused among the atoms of aluminum alloy forming the brake disk body 11 to form a diffusion layer 17 (See Fig. 8) between them. As a result, adhesion strength of the plating layer 13 increases.

Moreover, increased hardness of the plating layer 13 is less likely to wear, or durability time of the plating layer 13 increases. This results in that the maintenance of the brake requires only the replacement of the brake friction pad 12 which is less expensive than the brake disk.

### Fourth Embodiment

The cracks 15 in the plating layer 13 may also be produced in the fine network pattern by a mechanical process such as burnishing.

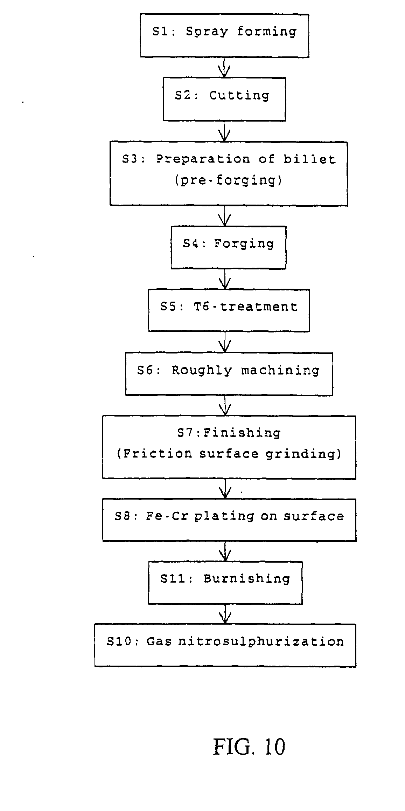

A method of manufacturing brake disk of this embodiment will be described in detail in reference to Fig. 10.

Fig. 10 shows the process of manufacturing the brake disk in which cracks are produced by burnishing. In the Figure, components that are the same as or counterparts of those described in reference to Figs. 1 to 9 are provided with the same numerals and detailed descriptions are omitted.

In order to carry out the brake disk manufacturing process of this embodiment, first a brake disk body 11 is formed into an intended shape through the steps S1 to S7 shown in Fig. 10. Next, the brake disk body 11 is plated in the step 8. Here, Fe-Cr alloy is employed for example as a highly wear-resistant metal. Incidentally, Fe, Cr, and Ni can be used in place of the Fe-Cr alloy.

Plating is carried out so that the thickness of the plating layer 13 falls within the range of 10 to 100 µm. The plating method is the same as that in the first embodiment. While the thickness of the plating layer 13 must be 20 µm or thicker in the first embodiment, in this embodiment, the thickness of the plating layer 13 may be thinner than that in the first embodiment.

After finishing the plating process, a burnishing process is applied in the step S11. The burnishing process is carried out with a roller (not shown) which is pressed against and rolled over the plating layer 13.

By applying the burnishing process in this way, cracks 15 in the fine network pattern are formed in the plating layer 13.

After the burnishing is over, to increase the hardness of the plating layer 13 made of the Fe-Cr alloy, a gas nitrosulphurization process, step S10 in Fig. 10, is applied to the plating layer 13. Applying the gas nitrosulphurization process makes it possible not only to increase the hardness of the plating layer 13 but also to make the cracks 15 in a fine pattern like in the third embodiment. It also increases the adhesion strength of the plating layer 13 because a diffusion layer 17 (See Fig. 8) is formed between the plating layer 13 and the brake disk body 11. The conditions of the gas nitrosulphurization process are the same as in the third embodiment.

Incidentally, like in the second embodiment, the heating process may be applied after the burnishing. The network pattern of the cracks 15 may be made further finer by setting the heating temperature at 400°C or higher. When the heating temperature is about 500°C, the diffusion layer 17 between the plating layer 13 and the brake disk body 11 is efficiently formed in about 5 hours, and the adhesion strength of the plating layer 13 increases.

Forming the fine network pattern of cracks 15 in the plating layer 13 by applying the burnishing process as described above also provides the same effects as with the first embodiment.

### Fifth embodiment

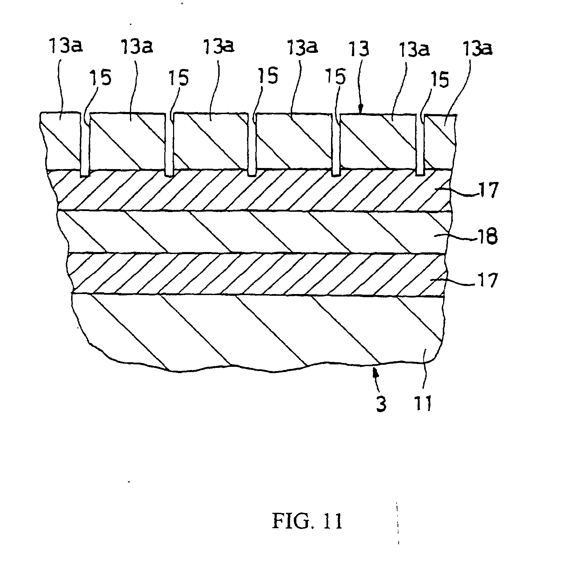

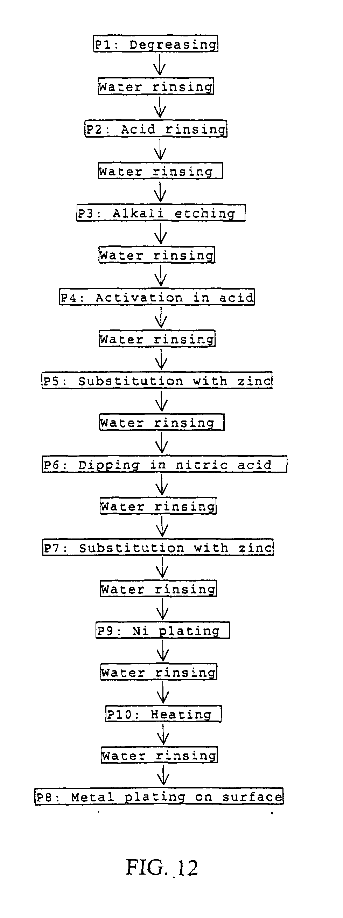

Another plating layer at metal may be formed between the plating layer 13 and the brake disk body 11. The brake disk of this embodiment and the method of manufacturing the same will be described in detail in reference to Figs. 11 and 12.

Fig. 11 shows a cross-section of this embodiment with an intermediate plating layer 18 between the plating layer 13 and the brake disk body 11. Fig. 12 is a diagram for explaining the plating process. In the Figures, components that are the same as or counterparts of those described in reference to Figs. 1 to 10 are provided with the same numerals and detailed descriptions are omitted.

Fig. 11 shows the intermediate plating layer 18 formed on the brake disk body 11. The metal for forming the intermediate plating layer 18 is one such as Ni with a high corrosion resistance. Diffusion layers 17 are formed between the intermediate plating layer 18 and the brake disk body 11, and between the intermediate plating layer 18 and the outside plating layer 13.

To manufacture the brake disk 1, like in the first embodiment, the brake disk body 11 is formed into the intended shape, subjected to the pretreatment for the plating process and water rinsing processes shown as the steps P1 to P7 in Fig. 12, and plated wit Ni in the step P9.

The Ni plating is applied using the plating apparatus used for forming the plating layer 13 on the outside surface of the brake disk body 11. The plating conditions are the same as those for forming the plating layer 13 on the outside surface of the brake disk body 11.

When the Ni plating is over, the workpiece is rinsed with water, followed by a heating process (step P10) to form a diffusion layer 17 between the Ni plating layer (intermediate plating layer 18) and the brake disk body 11. Also in this case, the heating temperature is set to 500°C or higher. As the diffusion layer 17 is formed, the adhesion strength of the Ni plating layer increases.

The thickness of the plated coating as the intermediate layer 18 is sufficient within the range of 0.1 to 5 µm for corrosion resistance and need not be thicker than that.
Reducing the plating thickness makes it possible to prevent cracks from being produced by internal stresses during the plating process, for the plating layer to follow thermal expansion by heat generated during braking operation, and to prevent cracks from being produced in the Ni plating layer. Since the thermal expansion coefficient of Ni is about the same as that of aluminum alloy, less thermal stresses are produced and cracks are less likely to occur.

After the heating, plating is applied in the step P8 to form a plating layer 13 of a metal having high wear-resistance such as Fe, Fe-Cr, or Cr on the outside surface of the Ni plating layer 17. The plating conditions are the same as those in the first embodiment.

When this plating process is over, through the same process as in the embodiments 2 to 4, the cracks 15 in the fine network pattern are formed in the plating layer 13, and the diffusion layer 17 is formed between the plating layer 13 and the Ni plating layer 18.

Forming the internal intermediate plating layer 18 made of Ni of high corrosion resistance as shown in this embodiment makes it possible to prevent water entering through the cracks 15 in the outside plated surface 13 from coming into contact with the brake disk body 11 made of aluminum alloy.

As a result, the brake disk 3 or the brake disk body 11 of this embodiment is not corroded even if it is wetted with rain water or the like, and the plating layer 13 on the outside surface is prevented from coming off due to corrosion. Furthermore, since both of the outside surface plating layer 13 and the intermediate plating layer 18 are deposited by plating, two kinds of metallic layers can be applied using a single plating apparatus, so that the manufacturing cost is held low.

Although the thermal expansion coefficient of Ni used for the intermediate plating layer 18 is greater than that of aluminum alloy, when it is compared with that of iron-based metals such as cast iron, it is still closer to that of aluminum. As a result, thermal stresses produced by thermal expansion of the brake disk body of aluminum alloy 11 are relatively small. Therefore, forming the intermediate layer 18 does not cause the brake disk 3 to warp or deflect, or does not cause the outside plating layer 13 to come off the brake disk body 11.

Incidentally, the method of creating the fine network pattern of cracks 15 in the plating layer 13 on the friction surface of the brake disk 3 is not limited to those shown in the above embodiments, but may be changed appropriately.

Also, the brake disk 3 of this embodiment may be used in other vehicles such as automobiles, three-wheeled motor vehicles, and snowmobiles, as well as in motorcycles.

### Sixth Embodiment Not Being Part of the Present Invention

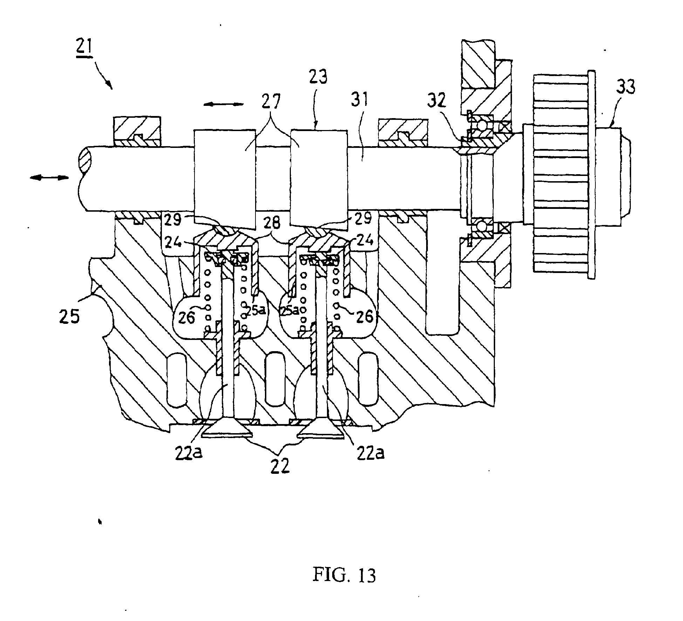

The above described method of manufacturing the brake disk according to this invention may be applied to engine valve lifters not being part of the present invention. An embodiment in which the above described method is applied to a valve lifter, not being part of the present invention, will be described in detail in reference to FIGs. 13 to 16.

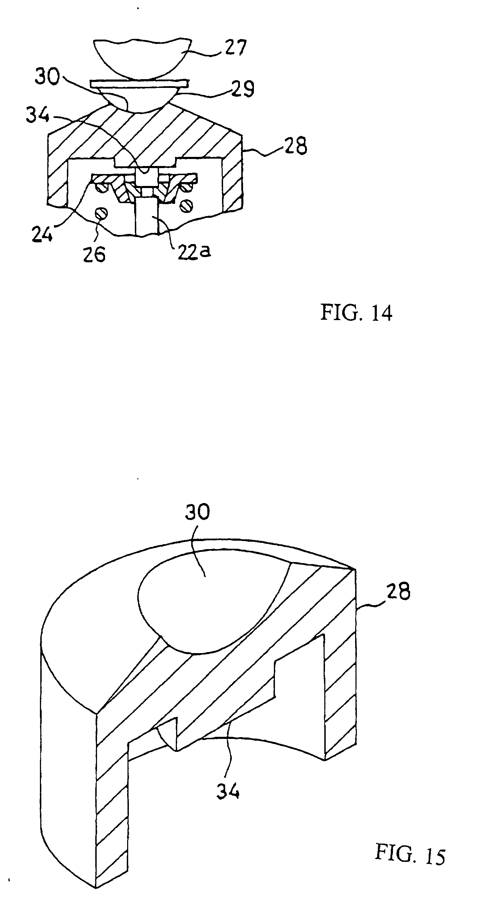

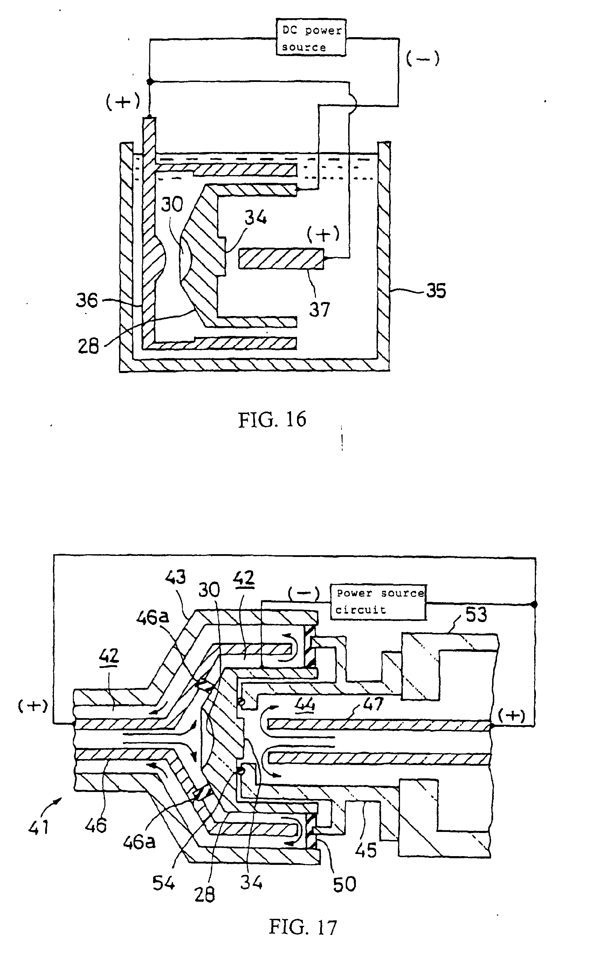

Fig. 13 shows a cross-section of a variable valve actuating mechanism of an engine. Fig. 14 shows a cross-section of an essential part of a valve lifter in an enlarged scale. Fig. 15 is an oblique or perspective view of the valve lifter, shown in the state of being cut away from a plane passing through the axial center. Fig. 16 shows an arrangement in which the valve lifter is being plated.

Here, it is stated that the following described embodiment is not a part of the present invention.

Fig. 13 shows a variable valve actuating mechanism 21 of an engine. The valve mechanism 21 is constituted to drive two intake valves 22 per cylinder with a single intake camshaft 23. By the way, while a mechanism for actuating the intake valves 22 is described here, exhaust valves are also actuating with the same mechanism.

A spring retainer 24 is attached to the valve shaft 22a of the intake valve 22. A valve spring 26 is installed between the valve retainer 24 and a cylinder head 25. A valve lifter 28 is interposed between the intake valve 22 and a cam 27 of an intake camshaft 23.

The valve lifter 28 is made in a bottomed cylindrical shape by die casting or forging of aluminum alloy. As shown in Fig. 14, a sliding piece 29 is fitted into the top outside surface of the valve lifter 28. The top inside surface of the valve lifter 28 is made to come into contact with the valve shaft fore-end of the intake valve 22. The outside circumferential surface of the valve lifter 28 fits slidably into the lifter hole 25a of the cylinder head 25. The sliding piece 29 is made in a hemispherical shape of a highly wear resistant metal or ceramic material and slidably fitted in a hemispherical recess 30 formed in the top outside surface of the valve lifter 28. Drive force from the cam 27 is transmitted through the sliding piece 29 to the valve lifter 28.

The intake camshaft 23 comprises a camshaft body 31 having cams 27, and a support shaft 32 attached to one axial end of the camshaft body 31. At the end of both of the components is provided a camshaft displacement device 33.

The camshaft body 31 is supported rotatably and axially movably on the cylinder head 25. The support shaft 32 is supported rotatably and axially immovably on the cylinder head 25. The cams 27 are formed in a three-dimensional shape so that the position of the cam surface change in the radial direction of the cam shaft body 31 and that the cam surface slopes relative to the axial direction. The flat surface of the sliding piece 29 is made to come into sliding contact with the cam surface.

The camshaft displacement device 33 is constituted to change valve timing or the valve lift curve by the axial movement of the camshaft body 31.

With the variable valve actuating mechanism 21 constituted as described above, the opening degree and opening-closing timing of the intake valve 22 can be changed by changing the projection of the cam surface by the axial movement of the camshaft body 31, caused with the camshaft displacement device 33. Here, since the sliding piece 29 in the state of being fitted in the hemispherical recess 30 of the valve lifter 28 tilts so as to follow the cam surface, the drive force can be transmitted to the valve lifter 28 even if the position of the cam 27 changes.

The sliding surfaces of the valve lifter 28, that is, the hemispherical recess 30 for the sliding piece 29 to fit in, and the valve pressing surface 34 for being contacted with the valve shaft 23a of the intake valve 22, and the outside circumferential surface of the valve lifter 28 for fitting into the lifter hole 25a, are formed with plated surfaces made of a metal of a high wear-resistance. In these plating layers are formed cracks 15 of the fine network pattern.

To plate the sliding surfaces, the valve lifter 28 is dipped in a plating liquid vat 35, as shown in Fig. 16. The top and circumferential surfaces of the valve lifter 28 are covered with a first anode 36 of a bottomed cylindrical shape. A second anode is disposed to face the valve pressing surface 34 on the top inside surface of the valve lifter 28. Plating is carried out with the valve lifter 28 serving as the cathode, using a DC power source.

The plating conditions are the same as those in the first embodiment. That is, Fe plating or Fe-Cr plating is applied under the conditions shown in Table 6.

After forming the plating layer of the high wear-resistance metal on the sliding surfaces of the valve lifter 28, the valve lifter 28 is heated like in the second embodiment, or applied with the gas nitrosulphurization process like in the third embodiment. By applying the heating process or the gas nitrosulphurization process, cracks 15 in the fine network pattern are formed as shown in Fig. 4 over the entire plating layer.

Therefore, as mentioned above it is possible to manufacture the valve lifter 28 with its sliding surfaces having a high wear-resistance, and to reduce the weight of the variable valve actuating mechanism 21. In particular, since the strength of the plated surfaces on the valve pressing surface 34 is increased by the gas nitrosulphurization process, the surfaces do not yield to high surface pressures.

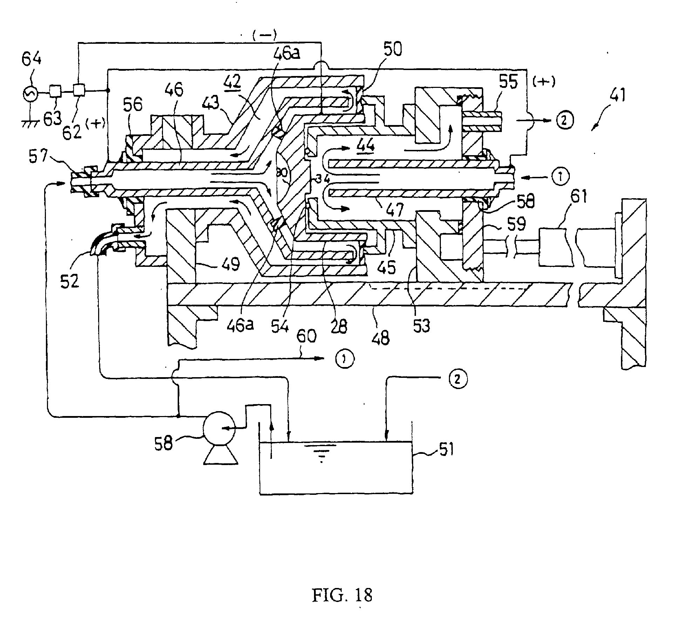

To form the metal plating layer of high wear-resistance on the valve lifter 28, as shown in Figs. 17 and 18, a high speed plating apparatus may be used.

Fig. 17 is an enlarged sectional view of an essential part of a high speed plating apparatus for the valve lifter. Fig. 18 shows a cross-section of the high speed plating apparatus for the valve lifter.

The high speed plating apparatus 41 shown in these Figures comprises; a first outer cylinder 43 constituting a first plating liquid chamber 42 on the outer side of the valve lifter 28, and a second outer cylinder 45 constituting a second plating liquid chamber 44 in the inside circular space of the valve lifter 28. Plating liquid is supplied from a first inner cylinder 46 disposed in the first plating liquid chamber 42 and a second inner cylinder 47 disposed inside the second plating liquid chamber 44 respectively into the plating liquid chambers 42 and 44.

The first outer cylinder 43 is secured to a pedestal 48 through a support member 49, and its end on the valve lifter 28 side is made to contact the valve lifter 28 through a seal member 50 having insulation property. The seal member 50 is made in an annular shape and supported with the second outer cylinder 45.

The first plating liquid chamber 42 inside the first outer cylinder 43 is formed so that the hemispherical recess 30 of the valve lifter 28 constitutes part of the chamber wall. The first plating liquid chamber 42 is connected to a return pipe 52 for returning plating liquid back to a plating liquid vat 51.

The second outer cylinder 45 is supported axially movably through a support member 53 on the pedestal 48, and made to contact the inside bottom surface of the valve lifter 28 through a seal member 54 having insulation property. The second plating liquid chamber 44 inside the second outer cylinder 45 is formed so that the valve pressing surface 34 inside the valve lifter 28 constitutes part of the chamber wall. The second plating liquid chamber 44 is connected to a return pipe 55 for returning plating liquid back to the plating liquid vat 51.

The first inner cylinder 46 is supported through an insulation member 56 on the first outer cylinder 43, with its one end formed to accommodate the valve lifter 28, and with the other end connected to the delivery port of a plating liquid pump 58 through a plating liquid supply pipe 57. Part of the first inner cylinder 46 opposing the top surface of the valve lifter 28 is made to contact the valve lifter 28 through stop rubbers 46a. The stop rubbers 46a are disposed in a plural number of positions spaced along the circumferential directions of the first inner cylinder 46 so that a plating liquid passage formed between the first inner cylinder 46 and the valve lifter 28 is not blocked. The plating liquid pump 58 is constituted to draw up plating liquid stored in the plating vat 51 and deliver.

The second inner cylinder 47 is supported through an insulation member 58 and a disk-shaped cap 59 on the support member 53, with its one end made to face the valve pressing surface 34 inside the valve lifter 28, and with the other end connected to the delivery port of the plating liquid pump 58 through a plating liquid supply pipe 60. The cap 59 for supporting the second inner cylinder 47 is connected to an air cylinder 61 for moving the second outer cylinder 45 and the second inner cylinder 47 to and from the valve lifter 28. That is to say, it is constituted that the valve lifter 28 is held between the first inner cylinder 46 and the second outer cylinder 47 by moving the second outer cylinder 45 to the left in Fig. 18.

With the high speed plating apparatus 41 constituted as described above, plating is carried out by constantly circulating the plating liquid through the first and second plating liquid chambers 42 and 44, with the first and second inner cylinders 46 and 47 used as anodes and the valve lifter 28 as a cathode. The first and second inner cylinders 46 and 47 and the valve lifter 28 are respectively connected to a control circuit 62 shown in Fig. 18. The control circuit 62 is connected through a rectifier 63 to an AC power source 64.

The conditions (plating liquid composition, current density, and liquid temperature) for depositing the plating layer made of a metal having high wear-resistance on the valve lifter 28 using the high speed plating apparatus 41 are the same as in the first embodiment.

Plating time for the valve lifter 28 is remarkably shortened when the high speed plating apparatus 41 is used.

### Seventh Embodiment Not Being Part of the Present Invention

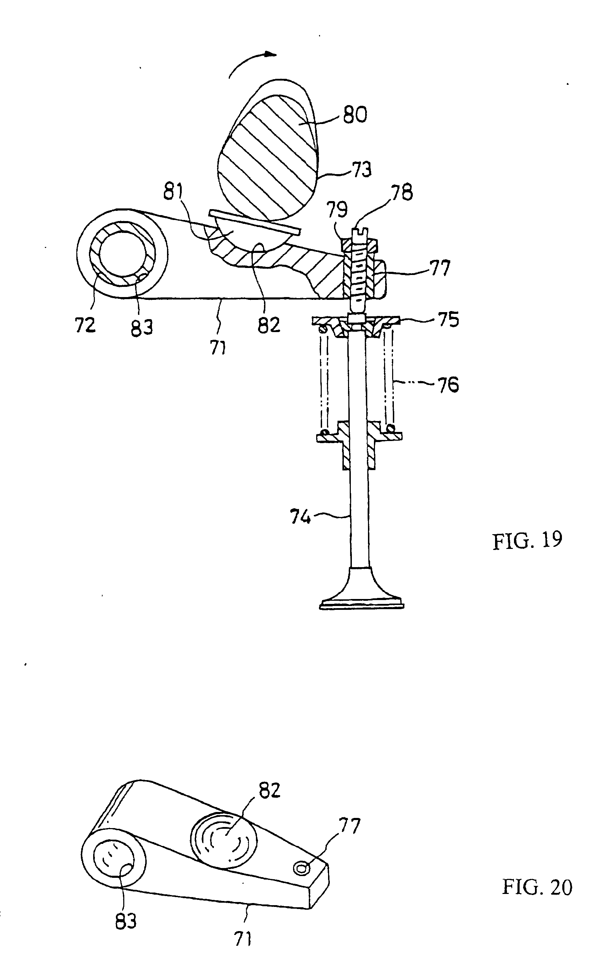

The above described method of manufacturing the brake disk may be applied to a rocker arm of an engine. An embodiment employed for applying the invention to a rocker arm, not being part of the present invention, will be described in detail with reference to Figs. 19 through 21.

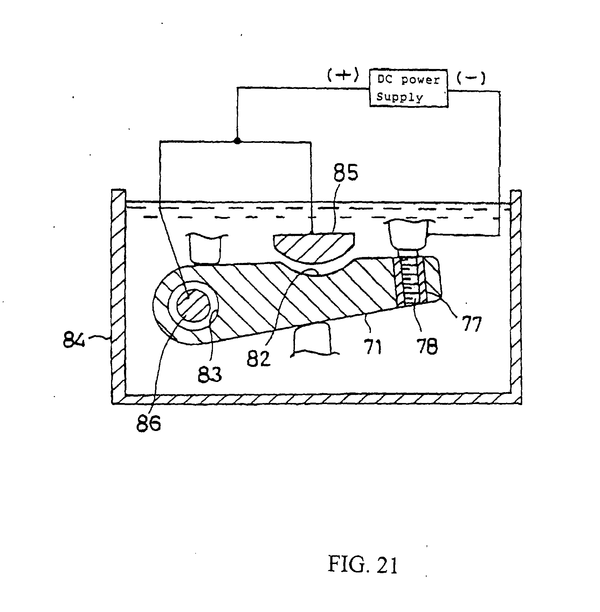

Fig. 19 is a sectional view of a variable valve actuating mechanism having a rocker arm, Fig. 20 is a perspective view of the rocker arm and Fig. 21 is a sectional view showing that the rocker arm is being plated, wherein the following described embodiment is not a part of the present invention.

In these Figures, reference numeral 71 denotes a rocker arm, 72 a rocker shaft, 73 a camshaft, 74 an intake and an exhaust valve, 75 a spring retainer, and 76 a valve spring. At the distal end of the rocker arm 71 are mounted an adjustment screw 78 and a cylindrical insert member 77 of stainless steel, on the outer surface of which tapping threads are formed. A lock nut 79 is engaged with the adjustment screw 78.

The rocker arm 71 in this embodiment is formed by die casting or forging process, using aluminum alloy as its material. A sliding piece 81 is interposed between the camshaft 73 and a cam 80. This sliding piece 81 is made of ceramic having high wear-resistance, and has part in a shape of semi-sphere which can be slidably fitted in the recess of the rocker arm 71 having a hemispherical shape corresponding to that of the sliding piece 81. The camshaft 73 is, as in the same manner of the sixth embodiment, provided with a camshaft displacement apparatus for displacing the cam 80 in an axial direction and the cam 80 is therefore a three dimensional cam.

Plating layers having high wear-resistance are deposited on the inner surface of the hemispherical recess 82 and the wall of a hole 83 for the rocker shaft, and both of the inner surface and the wall functions as sliding surfaces of the rocket arm 71.

In order to form this plating layer on the rocker arm 71, as shown in Fig. 21, the rocker arm 71 is dipped in a plating liquid bath 84, with a first anode being faced the hemispherical recess 83 and the second rod like anode being also disposed within the hole 83 of the rocker shaft. Plating is then carried out with the rocker arm 71 as a cathode. The power source is a DC power source.

In this case the plating conditions are the same those in the first embodiment. That is, Fe or Fe-Cr plating process is carried out in accordance with the conditions specified in Table 6

Thus, after the metal plating layers of high wear-resistance were deposited on the sliding surfaces of the rocker arm 71, the rocker arm 71 is heated as in the second embodiment, or subject to nitrosulphurizing process as in the third embodiment. Application of such heat treatment or nitrosulphurization result in forming a network of fine cracks all over the plating areas, as shown in Fig. 4.

In accordance with this embodiment a rocker arm 71 of aluminum alloy whose slide surfaces have high wear-resistance can be manufactured and the intention of making the variable valve actuating mechanism light in weight can be achieved.

### Eighth Embodiment Not Being Part of the Present Invention

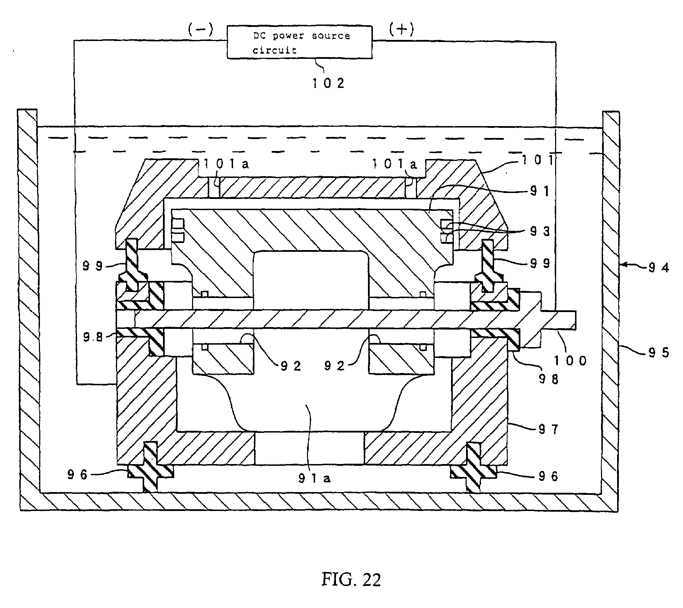

The above described method of manufacturing the brake disk may be applied to a piston of an engine. An embodiment employed for applying the invention to a piston, not being part of the present invention, will be described in detail with reference to Fig. 22.

Fig. 22 is a sectional view showing that a piston is being plated.

The piston 91 shown in Fig. 22 is formed by die casting or forging process, using aluminum alloy as its material. Plating layers having high wear-resistance are deposited on the walls of the bores for a piston pin, a top surface, an outer circumference, and walls of piston-ring groves 93. A piston plating apparatus 84 shown in Fig. 22 is used to deposit those plating layers.

The plating apparatus 94 comprises a plating liquid bath 95; a cylindrical cathode 97 having a bottom end and supported on the bottom of the plating liquid bath through an insulating member; a first anode 100 and a second anode 101 supported on the cathode 97 through insulating members 98, 99, respectively; and a DC power source circuit 102.

The cathode 97 supports piston 91 on the bottom surface inside thereof and has a structure to cover the piston skirt 91a. In this embodiment, the inner surface of the cathode 97 is formed to allow the skirt to fit therein.

The first anode 100 is formed in a shape of round bar so as to be inserted through a bore 92 for the piston pin, of the piston 91 which is placed on and fits the cathode.

The second anode 101 is formed in a cylindrical shape having a bottom end for covering both the top surface and the external surface of the top portion of the piston 91. The top portion of the piston means the area residing in the top surface side of the piston, adjacent the piston-ring grooves 93. Furthermore, a plurality of through-holes 101 a through which plating liquid flows are disposed in the part of the second anode 101, facing the top surface of the piston.

In order to deposit plating layers on the piston 91 by the plating apparatus 94, the piston 91 is fitted in the cathode 97 and a voltage is then applied on the cathode 97, the first anode 100 inserted through the bore 92 for the piston pin, and the second anode 101 covering the top end of the piston. The plating conditions are the same those in the first embodiment. That is Fe plating or Fe-Cr plating is carried out under the conditions shown in Table 6.

Thus, after the metal plating layers of high wear-resistance were deposited on the piston 91, the piston 91 is heated as in the second embodiment, or subject to nitrosulphurizing process as in the third embodiment. Application of such heat treatment or nitrosulphurization result in forming a network of fine cracks all over the plating areas, as shown in Fig. 4.

In accordance with this embodiment a piston 91 of aluminum alloy in which the wall of the bore 92 for the piston pin, the outer surface, and the wall of piston-ring grooves 93 have high wear-resistance can be manufactured and the intention of making the engine light in weight can be achieved. Furthermore, high temperature strength of the piston surface applied with pressure can be increased as Fe or Fe-Cr plating having high heat-resistance is deposited on the top surface of the piston. Additionally, providing cracks results in the increase of durability without any peeling.

### Ninth Embodiment Not Being Part of the Present Invention

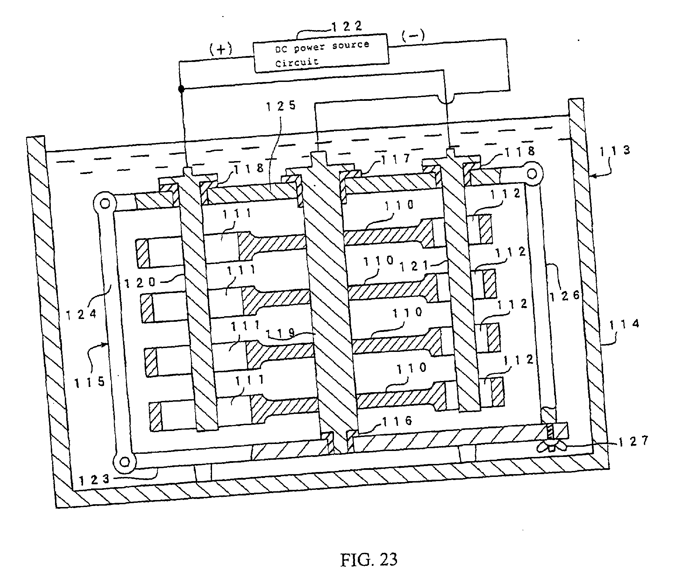

The above described method of manufacturing the brake disk may be applied to a connecting rod of an engine. An embodiment employed for applying the invention to a connecting rod, not being part of the present invention, will be described in detail with reference to Fig. 23.

Fig. 23 is a sectional view showing that a connecting rod is being plated.

The connecting rod 110 shown in Fig. 23 is formed by die casting or forging process, using aluminum alloy as its material. Plating layers having high wear-resistance are deposited on the wall of a big end bore 111 and the bores for a piston pin, a top surface, an outer circumferential surface, and the wall of a small end bore 112.

A connecting rod plating apparatus 113 shown in Fig. 23 is used to deposit plating layers on both walls.

The plating apparatus 113 comprises such as, a plating liquid bath 114 for reserving plating liquid; an electrode support member 115 supported on the bottom of the plating liquid bath 114; a cathode 119 supported on the electrode support member 115 via insulating members 116-118 and first and second anodes 120, 121; and a DC power source circuit 122 for applying voltage to those electrodes.

The electrode support member 115 comprises a pedestal 123 placed on the bottom of the plating liquid bath 114; first connection member 124 which is mounted pivotably on the pedestal at one end and extends upward; a support plate 125 which is mounted pivotably on the top end of the first connection member 124 at one end and extends horizontally; and second connection member 126 which is mounted pivotably on the other end of the support plate 125 and extends downward. The bottom end of the second connection member 126 is secured to the other end of the pedestal 123 by a wing nut 127.

The cathode 119 passes through the support plate 125 and then extends downward therefrom. The bottom end of the cathode 119 is supported on the pedestal 116. On the cathode 119 are secured four connecting rods spaced from each other in the vertical direction.

The first anode 120 is supported at one end of the support plate 125 such that it is inserted through the big end bore 111 of the connecting rod 110 and the second anode 121 at the other end such that it is inserted through the small end bore 112.

In order to deposit plating layers on the connecting rod 110 by the plating apparatus 113, the connecting rod 110 is secured to the cathode 119 and a voltage is then applied on the cathode 119 and the first and second anodes 120, 121. Plating conditions are the same those in the first embodiment. That is Fe or Fe-Cr plating process is carried out in accordance with the conditions specified in Table 6

Thus, after the metal plating layers of high wear-resistance were deposited on the connecting rod 110, the connecting rod 110 is heated as in the second embodiment, or subject to nitrosulphurizing process as in the third embodiment. Application of such heat treatment or nitrosulphurization result in forming a network of fine cracks all over the plating areas.

In accordance with this embodiment a connecting rod 110 of aluminum alloy in which walls of the big end bore 111 and the small end bore 112 have high wear-resistance can be manufactured and the intention of making the connecting rod light in weight can be achieved.

Aluminum alloy, for example Alloy 1-3 shown in the following Table 1, for forming the brake disk body 11, valve lifter 28, rocker arm 71, piston 91 or connecting rod 110 may be used:

**[Table 1] Examples of Aluminum-alloy Components**

| Alloy No. | Chemical component (%) | | | | | | | | |
|---|---|---|---|---|---|---|---|---|---|
| | Cu | Si | Mg | Zr | Fe | Mo | V | Al | |
| Alloy 1 | 1 | 17 | 0.5 | 1 | 5 | | | balance | high strength |
| Alloy 2 | | | | 0.75 | 8.5 | 1 | 1 | balance | high heat-resistance |
| Alloy 3 | | | | 1 | 8 | 2 | 2 | balance | high heat-resistance |

Alloy 1 shown in the Table 1 is used to increase strength and Alloys 2 and 3 is used to increase heat resistance. That is, if the members described above are made of such aluminum alloy as generally used, the strength is reduced by the temperature raise during braking or engine operation, resulting in the occurrence of easy deformation of those members. For this reason, Fe and Zr are added to improve the strength and heat resistance. The disk member of the brake disk body is made from a billet processed by spray forming. In this method it is intended to obtain the improved strength due to the grain refining (not more than 1 µ) in the metal structure. Those alloys cannot be employed for casting process as the coarse intermetallic-compounds of Al-Fe are crystallized after they have been molten, and then causes the structure to be brittle. Accordingly, forging process is employed.

The materials shown in the following Tables 2-4 may be used as those for brake friction pads 12. Examples of material for a friction pad of synthetic resin are shown in Tables 2 and 3, while examples of material for a friction pad of sintered material are shown in Table 4.

**[Table 2] Materials (1) Constituting Friction Pad of Synthetic Resin**

| **Reinforcement Member** | **Binder** | **Filler** |
|---|---|---|
| Fibrous metal containing Zn, Mn, C, Cr, S or Al | Sulphur | Aluminum granulates |
| Acrylic pulp | Rubber latex | Vermiculite |
| Aramide pulp | Phenol type resin | Mica |
| Aramide fiber | Mixture of phenol type resin and nitrile rubber | Molybdate |
| Ceramic whisker of alumina or silica | Furan resin | Alumina agglomerate |
| Ceramic fiber of alumina or silica type | Polyimide | Graphite |
| Polycrystal fiber of potassium-barium 6-titanate substituted with aluminum | Meso-phase pitch | Calcium carbonate |
| Glass fiber | Calcium carbonate | Barium carbonate |
| Zeolite fiber | Thermosetting resin | |
| Cellulosic fiber | Aromatic nitro compound | |
| Bacteria cellulose | | |
| Polyacrylonitrile fiber | | |
| Copper fiber | | |
| Non - asbestos fiber | | |
| Aromatic Polyamid fiber | | |

**(Table 3) Materials (2) Constituting Friction Pad of Synthetic Resin**

| **Friction Adjustor** | **Abrasive** | **Lubricant** | **Others** |
|---|---|---|---|
| Cashew nut powder | Alumina | Chalcoblite | Carbide, oxide or nitride of Si or Al |
| Rubber scrap | Silica | Soap | Alumina |
| Cork | Zirconia | Calcium fluoride | Coke |
| Susolite Mica | Zircon | Metal sulfide | Alkali metal titanate compound powder |
| Cellulose | Magnesia | Hydrocarbon Wax | Pitch |
| Talc | Mullite | Cryolite | Calcium fluoride |
| Tripoli | Iron oxide | Flake graphite | Fluoroplastic fiber |
| Vermiculite | | Antimony sulfide | Synthetic graphite |
| Balite | | Molybdenum sulfide | Calcium oxide |
| Whiting | | | Magnesium oxide |
| Latex | | | Manganese oxide |
| Latex-impregnated vermiculite foam | | | Carbon |
| Oxide of rare earth element | | | Elastic graphite |
| Copper oxide powder | | | Natural graphite |
| | | | Metal powder, copper type |
| | | | Metal powder, aluminum type |
| | | | Metal powder, iron type |

**(Table 4) Composition of Sintered Friction Pads (%)**

| **Example No.** | **Cu** | **Ni** | **Fe** | **Zn** | **Sn** | **Ni-Cr alloy *** | **Others** |
|---|---|---|---|---|---|---|---|
| Example 1 | 40 - 50 | 8 - 20 | 0.1 - 6 | 3 - 7 | 1 - 7 | | ** |
| Example 2 | balance | | 3 - 7 | | 3 - 7 | | ** |
| Example 3 | 1 - 5 | | balance | | 1 -3 | | ** |
| Example 4 | balance | | | | | 10-25 | ** |
| Example 5 | balance | | | not more than 8 | 2 - 8 | | *** |

| | | | | | | | |
|---|---|---|---|---|---|---|---|
| * Ni-Cr alloy (Ni : Cr is 80 : 20 to 60 : 40) | | | | | | | |
| ** Graphite Ferrosilicon Metal oxide Zirconia Mullite Silica Silicon carbide Silicon nitride | | | | | | | |
| *** C : 20 - 35 % by weight SiO₂: 4 - 10 % by weight | | | | | | | |

The hardness of the sintered friction pads of the material shown in Table 4 is not more than 50 in Hv hardness. In Table 4, compounds referred as "Others" are those having the composition ratio of not more than 10 percent.

The pretreatment process prior to the plating process in each embodiment was carried out under the conditions shown in the following Table 5.

**(Table 5) Pretreatment Conditions**

| **Pretreatment process** | **Composition of treatment liquid** | | **Bath temperature (°C)** | **Treatment time (min)** |
|---|---|---|---|---|
| Degreasing | Silicate Chelating agent Surfactant | | 40 - 50 | 5 - 10 |
| Acid cleaning | 62 % Nitric acid ml/L | 500 | ambient temperature | 0.3 - 0.5 |
| Alkali etching | Sodium hydroxide 50 g/l Chelating agent Surfactant | 30 - | 40 - 60 | 0.3 - 0.6 |
| Activation | 62 % Nitric acid ml/L | 500 | ambient temperature | 0.3 - 0.5 |
| | Hydrofluoric acid g/l | 50 | | |
| Substitution with zinc | Sodium hydroxide Zinc | | 20 - 25 | 0.3 - 0.6 |
| Dipping in nitric acid | 5 % Nitric acid | | ambient temperature | 0.5 - 1.0 |

**(Table 6) Condition of Metal Plating**

| **Conditions** | **Fe plating** | **Fe - Cr plating** |
|---|---|---|
| Composition of plating solution | | Basic chromium sulfate 120 |
| | Ferrous nitride 250 | g/l |
| | g/l | Ammonium formate |
| | Ferrous chloride 40 | 55 g/l |
| | g/l | Ammonium oxalate |
| | Ammonium chloride 20 | 10 g/l |
| | g/l | Potassium chloride |
| | L - ascorbic acid | 54 g/l |
| | 3 g/l | Boric acid |
| | Citric acid 1.2 | 40 g/l |
| | g/l | Ferrous chloride |
| | Balance | 40 g/l |
| | Water | Balance |
| | | Water |
| Current density (A/dm²) | 2 | 5 |
| Temperature (°C) | 40 - 45 | 40 - 45 |
| Plating time (min) | 60 | 35 |
| Thickness of coating (µm) | 20 | 20 |
| Hardness (HV) | 300 - 400 | 600 - 700 |

The conditions of Fe or Fe-Cr alloy plating on the outside surface of a brake disk, the slide surface of a valve lifter, the slide surface of a rocker arm, the slide surface of a piston, and the slide surface of a connecting rod are shown in the following Table 6.

Each value shown in the respective item of Table 6 is the value obtained under the condition that the thickness of Fe layer and Fe-Cr layer is 20µm, the Hv hardness of Fe layer is 300 - 400, and of Fe-Cr layer is 600 - 700.

Each of the cracks 15 in the form of a fine network has the width of 1-10 µm and the crack density is 10-30 mm/mm². In this case, most of the inscribed circles of the network formed by the cracks 15 have the diameter d of not more than 1.5mm. The term "crack density" is defined as the total length (mm) of cracks 15 per the plated surface.

The thickness of the diffusion layer 17 is approximately 1 - 50 µm.

The thickness of the intermediate layer 18 is approximately 0.1 - 5 µm when Ni is used as the material for plating.

The nitrosulphurizing process was carried out under the conditions shown in Table 7.

**(Table 7) Condition of Nitrosulphurization**

| | |
|---|---|
| | 500±50 |
| Temperature (°C) | 5 |
| Time (h) | Gas mixture of N₂, H₂S and |
| Ambient | NH₃ |
| Hardness of skin (Hv) | 750 (700 - 800) |
| Fe - plating Fe - Cr plating | 1250 (1100 - 1350) |

When the gas nitrosulphurizing process is carried out under the conditions shown in Table 7, the Hv hardness of Fe layer obtained is approximately 750 (700 - 800), and of Fe-Cr layer obtained is approximately 1250 (1100 - 1350).

In the embodiments according to the present invention, an example in which the hub 2 is fixed directly to the inner circumference of the brake disk body of aluminum alloy having high heat-conductivity for the purpose of obtaining the effect to expel the frictional heat generated from the brake friction pad and transmitted to the hub is disclosed. But, if the heat radiation from the sections such as the brake disk body having relatively large surface area, other than that contacting with the brake friction pad is sufficient, the brake disk body 11 may be mounted on the hub 2 through an annular mount plate of iron-base alloy which is fixed to the outer circumference of the brake disk body 11. In case of employing this structure the brake friction pad is slidably contact with the inner circumference side of the brake disk body 11.

Additionally, the brake disk in each embodiment may be formed by die casting process other than the forging process. That is, instead of steps S1 through S14 in Figs. 5, 7, 9 and 10, the molten metal of aluminum alloy is injected at a high pressure into a die, followed by cooling, cutting the gate and removing metal burrs, and then the process goes to the T-6 process of the step 5.

Furthermore, instead of the gas nitrosulphurization the gas nitrizing process may be used under the conditions of heating temperature of 500 ± 50°C and heating time of 5 hours, using the mixture of N² and NH³.

With this invention as described above, since other components are prevented from contacting the aluminum alloy or material when the components come into sliding contact with the plating layer, aluminum or material components of a high wear-resistance can be provided.

Further, with the invention, the plating layer on the sliding contact surface is made up of innumerable metallic pieces separated from each other by cracks. The metallic pieces can expand following the thermal expansion of the brake disk.

Therefore, brake disks in which thermal stresses do not occur and from which plating layers are less likely to come off can be provided, while employing a constitution in which a metal having a high wear-resistance is employed.

Moreover, the metallic pieces in the network pattern may be made with minute cracks with the diameter of the inscribed circle of the network being 1. 5 mm or less can follow the thermal expansion of the brake disks.

It is possible that water which enters the cracks is prevented from coming into contact with the aluminum alloy or material by means of the intermediate plating layer made of a metal or material having a high corrosion resistance. Therefore, even if rain water or the like is sprayed on the brake disks, they are not corroded, and the plating layer is prevented from coming off as a result of corrosion.

Further, wear-resistance of the plating layer increases as nitriding or nitosulphurization is applied to the plating layer to increase hardness of the plating layer.
Therefore, brake disks having further higher wear-resistance can be provided.

Moreover, wear-resistance of the slide contact surface of the aluminum alloy brake disk increases.

Therefore, a brake disk can be provided that is lightweight while improving wear-resistance.

In addition, wear-resistance of the sliding contact surface of the valve lifter 28, not being part of the present invention, made of aluminum alloy increases.

Therefore, the valve lifter can be provided that is lightweight while improving wear-resistance.

Also, wear-resistance of the sliding contact surface of the rocker arm, not being part of the present invention, made of aluminum alloy increases.

Therefore, the rocker arm can be provided that is lightweight while improving wear-resistance.

Moreover, wear-resistance of the sliding contact surface of the piston pin hole of the piston, not being part of the present invention, made of aluminum alloy increases.

Therefore, the piston pin can be provided that is lightweight while improving wear-resistance.

Further, wear-resistance of the sliding contact surface of the connecting rod, not being part of the present invention, made of aluminum alloy increases.

Therefore, the connecting rod can be provided that is lightweight while improving wear-resistance.

In addition, a metallic layer made of a highly wear resistant metal is applied on the aluminum component by plating, and cracks are formed in the metallic layer with the plating process. The cracks change their shapes into a fine network pattern by the heat generated as the aluminum component is used.

Since a general purpose plating apparatus may be used for applying the invention, applying highly wear resistant metal to the aluminum component does not require a special joining apparatus. Moreover, any device or special process is not required specially for forming cracks in the metallic layer.

Therefore, brake disks capable of reducing weight and improving wear-resistance can be manufactured at a low cost.

The invention also makes it possible to form a metallic layer made of a highly wear-resistant metal on the brake disks by plating. After the plating process, cracks in fine network pattern can be formed in the metallic layer through a heating process

Since a general purpose plating apparatus may be used, applying highly wear resistant metal to the aluminum component does not require a special joining apparatus. Any device dedicated to form cracks in the metallic layer is not required either.

Since the metal that forms the metallic layer and the aluminum alloy that forms the brake disk diffuse into each other in the heating process after plating and a diffusion layer is formed between the two, the adhesion strength of the metallic layer can be increased.

Cracks in fine network pattern can be made in the metallic layer by heat when nitrosulphrization process is applied.

Applying the nitrosulphrization process increases hardness of the metallic layer.

Moreover, the intermediate layer can be made by plating for preventing water seeping into the cracks from contacting the aluminum alloy.

Therefore, since layers of two kinds of metals can be formed with a single plating apparatus, the brake disks having high corrosion resistance and plating layer adhesion strength can be manufactured at a low cost.

Therefore, since layers of two kinds of metals can be formed with a single plating apparatus, aluminum alloy parts having high corrosion resistance and plating layer adhesion strength can be manufactured at a low cost.

As described in the foregoing, according to the present invention, the frictional surface of the brake disk body is divided by the cracks into numerous fine metal segments which can follow thermal expansion of the brake disk body. Thus, it is possible to provide a brake disk which is free of thermal stresses, although the aluminum alloy brake disk body is provided with a metal layer having a high wear resistance.

Further, the metallic pieces in the network pattern made with minute cracks with the diameter of the inscribed circle of the network being 1. 5 mm or less can follow the thermal expansion of the brake disk body.

In addition, water which enters the cracks is prevented from coming into contact with the brake disk body made of aluminum alloy by means of the intermediate plating layer made of a metal having a high corrosion resistance.

Therefore, even when rain drops are deposited on the brake disk, no corrosion is caused, so that separation of the plating layer by corrosion is prevented. Thus, it is possible to provide a brake disk having a high corrosion resistance and a high bonding strength with the plating layer.

Moreover, a metallic layer made of a highly wear resistant metal is applied on the aluminum alloy brake disk body by plating, and cracks are formed in the metallic layer with the plating process. The cracks change their shapes into a fine network pattern by the heat generated as the aluminum component is used.

Since a general purpose plating apparatus may be used for applying the invention, applying highly wear resistant metal to the aluminum component does not require a special joining apparatus. Moreover, any device or special process is not required specially for forming cracks in the metallic layer.

The invention makes it possible to form a metallic layer made of a highly wear-resistant metal on the aluminum alloy brake disk body by plating. After the plating process, cracks in fine network pattern can be formed in the metallic layer through a heating process .

During the heating step subsequent to the plating, the metal constituting the metal layer and the aluminum alloy constituting the brake disk body are diffused into each other to form a diffusion layer there between. Therefore, the adhesion strength of the metal layer is improved.

According to the invention, a metal layer of a metal having a high wear resistance can be formed by welding on the aluminum alloy brake disk body. Further, cracks in the form of a fine mesh network can be formed in the metal layer by the heat used in carrying out the nitrosulfurization.

Since a general purpose plating apparatus may be used, applying highly wear resistant metal to the brake disk body does not require a special joining apparatus. Any special process specially for forming cracks in the metallic layer is not required. Applying the nitrosulphrization process increases hardness of the metallic layer.

Therefore, the brake disk can be manufactured at a low cost while reducing weight and increasing wear resistance by increasing the hardness of the metallic layer.

By the heat in the nitrodesulfurization treatment, the metal constituting the metal layer and the aluminum alloy constituting the break disk body part are diffused into each other to form a diffusion layer therebetween. Therefore, the adhesion strength of the metal layer is improved.

Further, the intermediate layer can be made by plating for preventing water seeping into the cracks from contacting the aluminum alloy break disk body.

Thus, two kinds of metal layers can be formed by one plating device so that the break disk having the feature of high adhesion strength can be produced by low cost.

As described in the foregoing, according to the present invention, the plating layer of the frictional surface is divided by the cracks into numerous separate fine metal segments which can follow thermal expansion of the brake disk body. Therefore, while the disk brake device has a construction wherein an aluminum alloy brake disk body is provided with a metal layer of a high wear resistance, bending or flex is not caused by the braking heat. Further, delamination of the metal layer from the brake disk body can be prevented.

Moreover, since a metal layer of a metal having a high wear resistance is formed by plating on the aluminum alloy brake disk body, it is not necessary to use a specific bonding device.

Therefore, the brake disk is light in weight. A disk brake device having a high durability can be provided at a low cost.

Further, when the brake pads are in sliding contact with the plating layer during braking, the brake pads having a lower hardness are first worn. Thus, the wear of the brake disk can be prevented. By exchanging the brake pads, the maintenance of the disk brake device can be made at a low cost.

With a further embodiment of the invention, the conventional brake pads may be used. It is, therefore, possible to provide a disk brake device at much lower manufacturing costs.

## Claims

1. Brake disk (3) made of aluminum or an aluminum alloy having a frictional surface with which another part is slidably contactable, wherein at least said frictional surface is provided with at least a first plating layer (13) of a metal having a high wear-resistance **characterized in that** said plating layer has cracks (15) having a fine network and formed throughout the whole area thereof wherein said cracks (15) in the form of a fine network have such a structure that an inscribed circle (dθ) of each of said networks of said cracks (15) has a diameter of not greater than 1.5 mm.

2. Brake disk according to claim 1, **characterized in that** a diffusion layer (17) is provided between said plating layer (13) and the aluminum or aluminum alloy base metal of the brake disk.

3. Brake disk according to claim 2, **characterized in that** a second or intermediate plating layer (18) of a metal having a high corrosion resistance is provided between said plating layer (13) and the aluminum or aluminum alloy base metal.

4. Brake disk according to claim 3, **characterized in that** two diffusion layers (17) are provided between said second plating layer (18) and said aluminum alloy base metal and between said plating layer (13) and said second plating layer (18).

5. Brake disk according to any one of the claims 1 to 4, **characterized in that** said plating layer (13) is made of iron or an iron alloy.

6. Brake disk according to claim 5, **characterized in that** nitrogen or a combination of nitrogen with sulfur is penetrated into said plating layer (13) made of iron or iron alloy.

7. Method of manufacturing a brake disk (3) made of aluminum or an aluminum alloy having a frictional surface with which another part is slidably contactable, wherein a billet is formed by spray-forming, the billet is forged to obtain the brake disk and electroplating is performed to provide at least the frictional surface with at least a first plating layer (13) of a metal having a high wear-resistance, cracks (15) are formed in the plating layer (13) having a fine network and formed throughout the whole area of the plating layer (13), wherein said cracks (15) in the form of the fine network have such a structure that an inscribed circle (dθ) of each of said networks of said cracks (15) has a diameter of not greater than 1.5 mm.

8. Method according to claim 7, **characterized in that** plating is performed until a thickness of the plating layer (13) increases to a level so that cracks (15) are formed in the plating layer (13).

9. Method according to claim 7 or 8, **characterized in that** said first plating layer (13) consists of metal having a high wear-resistance, in particular of iron or an iron alloy.

10. Method according to any one of the claims 7 to 9, **characterized in that** a diffusion layer (17) is provided between said plating layer (13) and said aluminum or aluminum alloy base metal of the brake disk.

11. Method according to any of the claims 7 to 10, **characterized in that** said plating layer (13) is heated so that cracks (15) having a fine network are formed throughout the whole area of said metal layer (13).

12. Method according to any one of claims 7 to 11, **characterized in that** said plating layer (13) is subjected to nitrosulfurization so that cracks (15) having a fine network are formed throughout the whole area of said metal layer (13).

13. Method according to any one of the claims 7 to 12, **characterized in that** before said aluminum or aluminum alloy base metal is provided with said first plating layer (13), a second metal layer (18) having a high corrosion-resistance is formed by plating on said aluminum or aluminum alloy base metal.

## Patentansprüche

1. Bremsscheibe (3), die aus Aluminium oder einer Aluminiumlegierung besteht und eine Reibfläche hat, mit der ein anderer Teil gleitend in Kontakt gebracht werden kann, wobei wenigstens die Reibfläche mit wenigstens einer ersten Galvanisierungsschicht (13) aus einem Metall mit einer hohen Verschleißfestigkeit versehen ist, **dadurch gekennzeichnet, dass** die Galvanisierungsschicht Risse (15) mit einem feinen Netz aufweist, die über die gesamte Fläche derselben ausgebildet sind, wobei die Risse (15) in Form eines feinen Netzes so aufgebaut sind, dass ein eingeschriebener Kreis (dθ) jedes der Netze von Rissen (15) einen Durchmesser von nicht mehr als 1,5 mm hat.

2. Bremsscheibe nach Anspruch 1, **dadurch gekennzeichnet, dass** eine Diffusionsschicht (17) zwischen der Galvanisierungsschicht (13) und dem Aluminium- oder Aluminiumslegierungs-Grundmetall der Bremsscheibe vorhanden ist.

3. Bremsscheibe nach Anspruch 2, **dadurch gekennzeichnet, dass** eine zweite oder Zwischen-Galvanisierungsschicht (18) aus einem Metall mit einer hohen Korrosionsbeständigkeit zwischen der Galvanisierungsschicht (13) und dem Aluminium-oder Aluminiumlegierungs-Grundmetall vorhanden ist.

4. Bremsscheibe nach Anspruch 3, **dadurch gekennzeichnet, dass** zwei Diffusionsschichten (17) zwischen der zweiten Galvanisierungsschicht (18) und dem Aluminiumlegierungs-Grundmetall sowie zwischen der Galvanisierungsschicht (13) und der zweiten Galvanisierungsschicht (18) vorhanden sind.

5. Bremsscheibe nach einem der Ansprüche 1 bis 4, **dadurch gekennzeichnet, dass** die Galvanisierungsschicht (13) aus Eisen oder einer Eisenlegierung besteht.

6. Bremsscheibe nach Anspruch 5, **dadurch gekennzeichnet, dass** Stickstoff oder eine Kombination aus Stickstoff und Schwefel in die Galvanisierungsschicht (13), die aus Eisen oder Eisenlegierung besteht, eingelassen ist.

7. Verfahren zum Herstellen einer Bremsscheibe (3), die aus Aluminium oder einer Aluminiumlegierung besteht und eine Reibfläche hat, mit der ein anderer Teil gleitend in Kontakt gebracht werden kann, wobei ein Block durch Spritzformen ausgebildet wird, der Block geschmiedet wird, um die Bremsschreibe zu erzeugen, und Galvanisieren durchgeführt wird, um wenigstens die Reibfläche mit wenigstens einer Galvanisierungsschicht (13) aus einem Metall mit einer hohen Verschleißbeständigkeit zu versehen, wobei Risse (15) in der Galvanisierungsschicht (23) mit einem feinen Netz ausgebildet und über die gesamte Fläche der Galvanisierungsschicht (13) ausgebildet sind, und die Risse (15) in Form des feinen Netzes so aufgebaut sind, dass ein eingeschriebener Kreis (dθ) jedes der Netze der Risse (15) einen Durchmesser von nicht mehr als 1,5 mm hat.

8. Verfahren nach Anspruch 7, **dadurch gekennzeichnet, dass** Galvanisieren durchgeführt wird, bis die Dicke der Galvanisierungsschicht (13) bis auf eine Höhe zunimmt, bei der Risse (15) in der Galvanisierungsschicht (13) ausgebildet werden.

9. Verfahren nach Anspruch 7 oder 8, **dadurch gekennzeichnet, dass** die erste Galvanisierungsschicht (13) aus Metall mit einer hohen Verschleißbeständigkeit, insbesondere Eisen oder einer Eisenlegierung, besteht.

10. Verfahren nach einem der Ansprüche 7 bis 9, **dadurch gekennzeichnet, dass** eine Diffusionsschicht (17) zwischen der Galvanisierungsschicht (13) und dem Aluminium- oder Aluminiumlegierungs-Grundmetall der Bremsscheibe vorhanden ist.

11. Verfahren nach einem der Ansprüche 7 bis 19, **dadurch gekennzeichnet, dass** die Galvanisierungsschicht (13) so erhitzt wird, dass Risse (15) mit einem feinen Netz über die gesamte Fläche der Metallschicht (13) ausgebildet werden.

12. Verfahren nach einem der Ansprüche 7 bis 11, **dadurch gekennzeichnet, dass** die Galvanisierungsschicht (13) Nitrosulfurierung unterzogen wird, so dass Risse (15) mit einem feinen Netz über die gesamte Fläche der Metallschicht (13) ausgebildet werden.

13. Verfahren nach einem der Ansprüche 7 bis 12, **dadurch gekennzeichnet, dass**, bevor das Aluminium- oder Aluminiumlegierungs-Grundmetall mit der ersten Galvanisierungsschicht (13) versehen wird, eine zweite Metallschicht (18) mit einer hohen Korrosionsbeständigkeit durch Galvanisieren auf dem Aluminium- oder Aluminiumlegierungs-Grundmetall ausgebildet wird.

## Revendications

1. Disque de frein (3) en aluminium ou en alliage d'aluminium, ayant une surface de friction avec laquelle une autre partie est susceptible d'entrer en contact de glissement, dans lequel au moins ladite surface de friction est munie d'au moins une première couche de plaquage (13) en un métal ayant une haute résistance à l'usure, **caractérisé en ce que** ladite couche de plaquage présente des fissures (15) formant un réseau fin et formées dans la totalité de l'aire de sa surface, dans lequel lesdites fissures (15) ayant la forme d'un réseau fin ont une structure tel qu'un cercle (dθ) inscrit, de chacun desdits réseaux desdites fissures (15), est d'un diamètre non supérieur à 1,5 mm.

2. Disque de frein selon la revendication 1, **caractérisé en ce qu'**une couche de diffusion (17) est prévue entre ladite couche de plaquage (13) et le métal de base, en aluminium ou en alliage d'aluminium, du disque de frein.

3. Disque de frein selon la revendication 2, **caractérisé en ce qu'**une deuxième couche ou couche de plaquage (18) intermédiaire de métal, ayant une haute résistance à la corrosion, est prévue entre ladite couche de plaquage (13) et le métal de base, en aluminium ou en alliage d'aluminium.

4. Disque de frein selon la revendication 3, **caractérisé en ce que** deux couches de diffusion (17) sont prévues, entre ladite deuxième couche de plaquage (18) et ledit métal de base en alliage d'aluminium, et entre ladite couche de plaquage (13) et ladite deuxième couche de plaquage (18).

5. Disque de frein selon l'une quelconque des revendications 1 à 4, **caractérisé en ce que** ladite couche de plaquage (13) est formée de fer ou d'un alliage de fer.

6. Disque de frein selon la revendication 5, **caractérisé en ce que** de l'azote, ou une combinaison d'azote avec du soufre, est introduit(e) en pénétrant dans ladite couche de plaquage (13) réalisée en fer ou en alliage de fer.

7. Procédé de fabrication d'un disque de frein (3) en aluminium ou en alliage d'aluminium, ayant une surface de friction avec laquelle une autre partie est susceptible d'entrer en contact de glissement, dans lequel une billette est formée par pulvérisation, la billette étant forgée pour obtenir le disque de frein et un électroplaquage étant effectué pour fournir au moins la surface de friction ayant au moins une première couche de plaquage (13) en métal de haute résistance à l'usure, des fissures (15) sont formées dans la couche de plaquage (13) ayant un fin réseau et sont formées dans la totalité de l'aire de la couche de plaquage (13), dans lequel lesdites fissures (15), se présentant sous la forme de fin réseau, ont une structure tel qu'un cercle (dθ) inscrit, de chacun desdits réseaux desdites fissures (15), est d'un diamètre non supérieur à 1,5 mm.

8. Procédé selon la revendication 7, **caractérisé en ce que** le plaquage est accompli jusqu'à ce qu'une épaisseur de la couche de plaquage (13) augmente à un niveau faisant que des fissures (15) sont formées dans la couche de plaquage (13).

9. Procédé selon la revendication 7 ou 8, **caractérisé en ce que** ladite première couche de plaquage (13) est formée de métal ayant une haute résistance à l'usure, en particulier de fer ou d'un alliage de fer.

10. Procédé selon l'une quelconque des revendications 7 à 9, **caractérisé en ce qu'**une couche de diffusion (17) est prévue entre ladite couche de plaquage (13) et ledit métal de base, en aluminium ou en alliage d'aluminium du disque de frein.

11. Procédé selon l'une quelconque des revendications 7 à 10, **caractérisé en ce que** ladite couche de plaquage (13) est chauffée, de manière que des fissures (15), en fin réseau, soient formées dans la totalité de l'aire de la couche métallique (13).

12. Procédé selon l'une quelconque des revendications 7 à 11, **caractérisé en ce que** ladite couche de plaquage (13) est soumise à une nitrosulfuration, de manière que des fissures (15) en fin réseau soient formées sur la totalité de l'aire de ladite couche métallique (13).

13. Procédé selon l'une quelconque des revendications 7 à 12, **caractérisé en ce que**, avant de munir ledit métal de base, en aluminium ou en un alliage d'aluminium, de ladite première couche de plaquage (13), une deuxième couche métallique (18), ayant une haute résistance à la corrosion, est formée par plaquage, sur ledit métal de base en aluminium ou en alliage d'aluminium.
